# EUROPEAN PATENT APPLICATION

(11) **EP 4 654 655 A1**
(43) Date of publication of application: **26.11.2025**
(21) Application number: 24753651.9
(22) Date of filing: 08.02.2024
(51) Int. Cl.: H04W 24/08, H04W 24/10, H04L 41/5067, H04L 65/60, H04W 8/24, H04W 72/21, H04W 76/27, H04W 88/02

(54) **METHOD AND DEVICE FOR MEASURING QOE IN INACTIVE MODE AND STANDBY MODE IN WIRELESS COMMUNICATION SYSTEM**

(30) Priority: 08.02.2023 KR 20230016514
(71) Applicant: Samsung Electronics Co., Ltd., Suwon-si, Gyeonggi-do 16677 (KR)
(72) Inventor: JEONG, Seungbeom, Suwon-si, Gyeonggi-do 16677 (KR); JUNG, Sangyeob, Suwon-si, Gyeonggi-do 16677 (KR)
(74) Representative: Nederlandsch Octrooibureau
(86) International application number: PCT/KR2024/001872
(87) International publication number: WO 2024/167330

(57) **Abstract**

The present disclosure relates to a 5G or 6G communication system for supporting higher data transmission rates. Particularly, the present disclosure proposes a method and device by which a terminal in an RRC inactive state or RRC idle state measures a QoE in a wireless communication system.

## Description

### [Technical Field]

The disclosure relates to a wireless communication system (or a mobile communication system). Specifically, the disclosure relates to a method for measuring quality of experience (QoE) in a radio resource control (RRC) inactive mode or RRC standby (or idle) mode in a wireless communication system (or a mobile communication system).

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, with the recent development of communication systems, demands for ways to efficiently measure and report QoE are increasing day by day.

### [Disclosure of Invention]

### [Technical Problem]

The disclosure is intended to improve the QoE measurement process, and in particular, to propose a process for efficiently measuring QoE in radio resource control (RRC) inactive mode or RRC idle mode.

### [Solution to Problem]

A method performed by a terminal according to an embodiment of the disclosure includes receiving configuration information related to a quality of experience (QoE) measurement in a radio resource control (RRC) idle state and an RRC inactive state, generating and storing a QoE measurement report in the RRC idle state, receiving, from a base station, a first message including information indicating that reporting of a QoE measurement generated in the RRC idle state or the RRC inactive state is permitted, and based on the information, transmitting, to the base station, a second message including the QoE measurement report and the configuration information in an RRC connected state.

A terminal according to an embodiment of the disclosure includes a transceiver, and a controller connected to the transceiver, and the controller is configured to receive configuration information related to a quality of experience (QoE) measurement in a radio resource control (RRC) idle state and an RRC inactive state, generate and store a QoE measurement report in the RRC idle state, receive, from a base station, a first message including information indicating that reporting of a QoE measurement generated in the RRC idle state or the RRC inactive state is permitted, and based on the information, transmit, to the base station, a second message including the QoE measurement report and the configuration information in an RRC connected state.

A method performed by a terminal according to an embodiment of the disclosure includes receiving configuration information related to a quality of experience (QoE) measurement in a radio resource control (RRC) idle state and an RRC inactive state, generating and storing a QoE measurement report in the RRC inactive state, receiving, from a base station, a first message including information indicating that reporting of a QoE measurement generated in the RRC idle state or the RRC inactive state is permitted, and based on the information, transmitting, to the base station, a second message including the QoE measurement report and the configuration information in an RRC connected state.

A terminal according to an embodiment of the disclosure includes a transceiver, and a controller connected to the transceiver, and the controller is configured to receive configuration information related to a quality of experience (QoE) measurement in a radio resource control (RRC) idle state and an RRC inactive state, generate and store a QoE measurement report in the RRC inactive state, receive, from a base station, a first message including information indicating that reporting of a QoE measurement generated in the RRC idle state or the RRC inactive state is permitted, and based on the information, transmit, to the base station, a second message including the QoE measurement report and the configuration information in an RRC connected state.

### [Advantageous Effects of Invention]

According to various embodiments proposed in the disclosure, the process of measuring and reporting QoE in RRC inactive mode and RRC idle mode may be performed efficiently.

### [Brief Description of Drawings]

FIG. 1 illustrates a structure of a wireless communication system according to embodiments of the disclosure.
FIG. 2 is a diagram illustrating a radio access state transition in a wireless communication system according to embodiments of the disclosure.
FIG. 3 is a diagram illustrating a technology for collecting and reporting cell measurement information according to embodiments of the disclosure.
FIG. 4 is a diagram illustrating a method for collecting and reporting cell measurement information according to an embodiment of the disclosure.
FIG. 5 is a diagram illustrating an operation for collecting and reporting cell measurement information according to embodiments of the disclosure.
FIG. 6 is a diagram illustrating an operation for configuring and/or reporting signaling-based QoE measurement according to embodiments of the disclosure.
FIG. 7 is a diagram illustrating a procedure for configuring and/or reporting management-based QoE measurement according to embodiments of the disclosure.
FIG. 8 is a flowchart illustrating a procedure for configuring and reporting RAN visible QoE measurement according to embodiments of the disclosure.
FIG. 9 is a diagram illustrating a procedure for a idle mode UE to store QoE measurement results in an AS layer, as an embodiment of the disclosure.
FIG. 10 is a diagram illustrating a procedure for a idle mode UE to store QoE measurement results in an AS layer, as an embodiment of the disclosure.
FIG. 11 is a diagram illustrating a procedure for an inactive mode UE to store QoE measurement results in an AS layer, as an embodiment of the disclosure.
FIG. 12 is a diagram illustrating a procedure for an inactive mode UE to store QoE measurement results in an AS layer, as an embodiment of the disclosure.
FIG. 13 illustrates an internal structure of a UE according to embodiments of the disclosure.
FIG. 14 illustrates a structure of a base station according to embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to device elements (e.g., controller, processor, artificial intelligence (AI) model, encoder, decoder, autoencoder (AE), and neural network (NN) model) and terms referring to data (e.g., signal, feedback, report, reporting, information, parameter, value, bit, and codeword) are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted. In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors.

Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters.

The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) or new radio (NR) standards are used for the sake of descriptive convenience. However, the disclosure is not limited by these terms and names, and may be applied in the same way to systems that conform other standards.

In the following description, a base station (BS) is an entity that allocates resources to terminals, and may be at least one of a radio access network (RAN) node, a next generation node B (gNode B, gNB), an evolved node B (eNode B, eNB), a Node B, a wireless access unit, a base station controller, a transmission and reception point (TRP), or a node on a network. In the disclosure, the term "eNB" may be interchangeably used with the term "gNB" for the sake of descriptive convenience. That is, a base station described as "eNB" may refer to "gNB".

A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

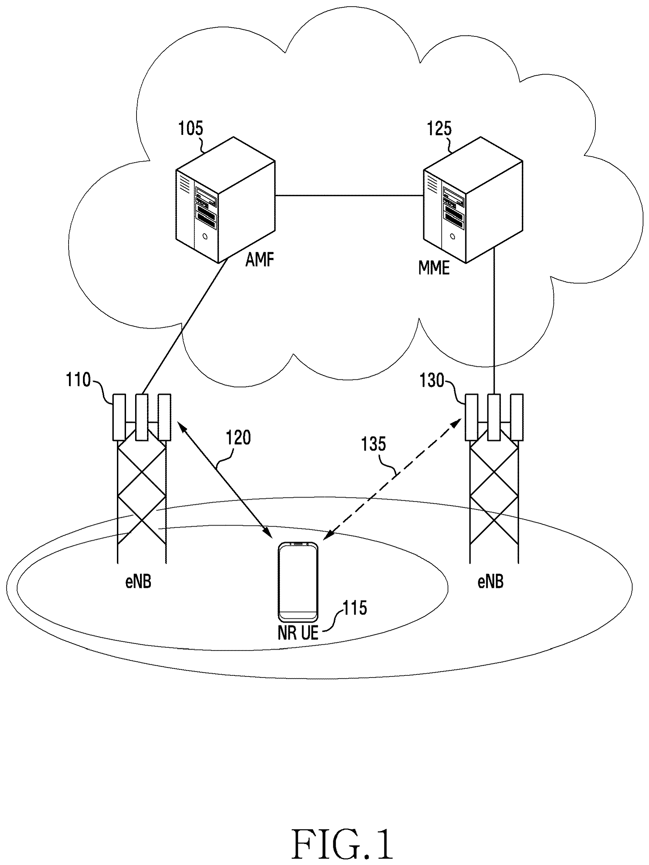

FIG. 1 illustrates a structure of a wireless communication system according to embodiments of the disclosure.

Referring to FIG. 1, a radio access network of a wireless communication system (new radio, NR) may include a next-generation node B (hereinafter gNB) 110 and an access and mobility management function (AMF) 105. A user terminal (new radio user equipment, hereinafter NR UE or UE) 115 may access an external network via the gNB 110 and the AMF 105.

In FIG. 1, the gNB may correspond to an evolved node B (eNB) of a conventional LTE system. The gNB may be connected to the NR UE through a radio channel and provide outstanding services as compared to a conventional node B (120). In the wireless communication system, since all user traffic is serviced through a shared channel, a device that collects state information, such as buffer statuses, available transmit power states, and channel states of UEs, and performs scheduling accordingly is required, and the gNB 110 may serve as the device. In general, one gNB may control multiple cells. In order to implement ultrahigh-speed data transfer beyond the current LTE, the wireless communication system may provide a wider bandwidth than the existing maximum bandwidth, may employ an orthogonal frequency division multiplexing (OFDM) as a radio access technology, and may additionally perform a beamforming technology. Furthermore, the wireless communication system may employ an adaptive modulation & coding (AMC) scheme for determining a modulation scheme and a channel coding rate according to a channel state of a UE. The AMF 105 may perform functions such as mobility support, bearer configuration, and QoS configuration.

The AMF is a device responsible for various control functions as well as a mobility management function for a UE, and may be connected to multiple base stations. In addition, the wireless communication system may interwork with the existing LTE system, and the AMF may be connected to an MME 125 via a network interface. The MME may be connected to an eNB 130 that is an existing base station. A UE supporting LTE-NR dual connectivity may transmit/receive data while maintaining connections to both the gNB and the eNB (135).

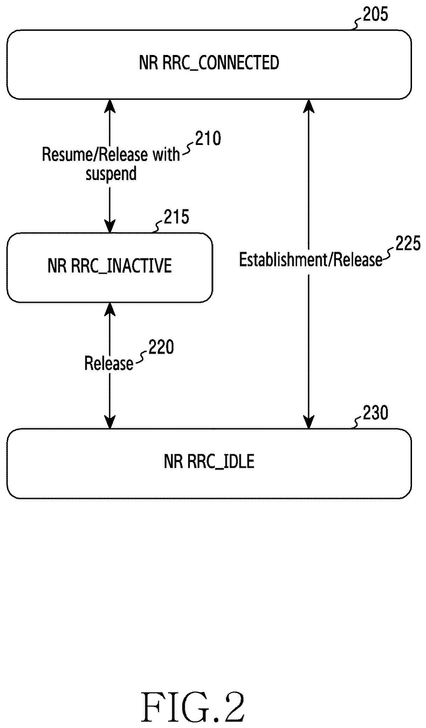

FIG. 2 is a diagram illustrating a radio access state transition in a wireless communication system according to embodiments of the disclosure.

Referring to FIG. 2, a wireless communication system may have three radio resource control (RRC) states or RRC modes. The connected mode (RRC_CONNECTED) 205 may be a radio access state in which a UE may transmit and/or receive data. The standby (or idle) mode (RRC_IDLE) 230 may be a radio access state in which a UE monitors whether paging is transmitted to itself. The two modes are radio access states that are also applied to the existing LTE system, and the detailed technology may be the same as that of the existing LTE system. A new inactive (RRC_INACTIVE) radio access state 215 may be defined in the wireless communication system. In a radio access state, a UE context may be maintained in the base station and the UE, and radio access network (RAN)-based paging may be supported. The characteristics of the new radio access state may be listed as follows.
- Cell re-selection mobility;
- CN(core network)-NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

The inactive (INACTIVE) mode may be transitioned to the connected mode or the idle mode by using a specific procedure. The inactive mode may be switched to the connected mode according to a resume procedure, and the connected mode may be switched to the inactive mode by using a release procedure including suspend configuration information (210). In the above-described procedure, one or more RRC messages may be transmitted and/or received between the UE and the base station, and may be composed of one or more steps. In addition, the inactive mode may be switched to the idle mode via the release procedure after the resume (220). The switch between the connected mode and the idle mode may follow the existing LTE technology. That is, the switch between the modes may be made via the establishment or release procedure (225).

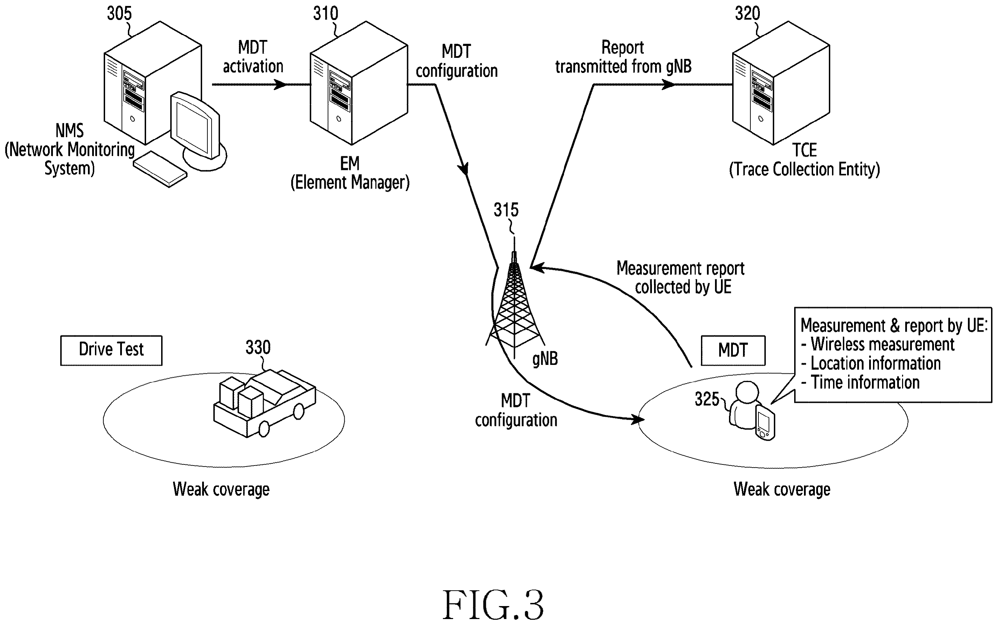

FIG. 3 is a diagram illustrating a technology for collecting and reporting cell measurement information according to embodiments of the disclosure.

Referring to FIG. 3, when constructing or optimizing a network, a mobile communication service provider may measure signal strength in an expected service area and deploy or readjust base stations in the expected service area based on the measured signal strength. The service provider may load signal measurement equipment on a vehicle 330 and collect cell measurement information in the expected service area. When the service provider collects cell measurement information by using the vehicle 330, a lot of time and cost may be required. Since the above-described process generally utilizes the vehicle 330, it may be commonly referred to as a drive test.

A UE 325 may be equipped with a function capable of measuring and reporting a signal received from a base station 315 to support operations such as cell reselection, handover, or addition of a serving cell when moving between cells. Therefore, instead of the drive test, the UE 325 within the service area may be utilized. Utilizing the UE 325 instead of the drive test may be referred to as a minimization of drive test (MTD). The service provider may configure MDT operation for specific UEs via various configuration devices of the network. The UEs 325 may collect and store signal strength information from the serving cell and neighboring cells in the connected mode (RRC_Connected), idle mode (RRC_Idle), or inactive mode (RRC_Inactive). The UE 325 may store various information such as location information, time information, and signal quality information in addition to signal strength information. The information stored in this way may be reported to the network when the UEs 325 are in the connected mode, and the reported information may be transmitted to a specific server.

Referring to Table 1 below, MDT operations may be largely classified into immediate MDT and logged MDT.

Immediate MDT may mean that the UE 325 directly reports the collected information to the network immediately. Since the report should be made without delay, only the connected mode UE 325 may perform the immediate MDT. Typically, a radio resource management (RRM) measurement process to support operations such as handover and addition of serving cells may be reused, and location information, time information, and the like may be additionally reported.

Logged MDT may mean that the UE 325 may store information collected without reporting the information to the network immediately, and then report the stored information after switching to the connected mode. The UE 325 in idle mode that cannot report the information to the network immediately may perform the logged MDT. The UE 325 in the inactive mode introduced in the wireless communication system may perform the logged MDT. When the specific UE 325 is in the connected mode, the network may provide the UE 325 with configuration information for performing the logged MDT operation, and the UE 325 may collect and store information according to the configuration information for performing the logged MDT operation after switching to the idle mode or the inactive mode.

**[Table 1]**

| | RRC state |
|---|---|
| Immediate MDT | RRC_Connected |
| Logged MDT | RRC_Idle, RRC_Inactive |

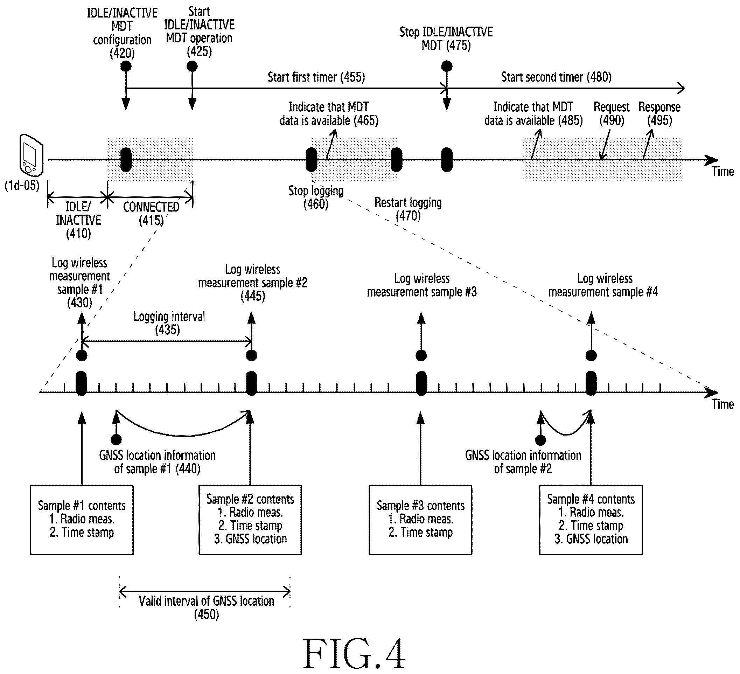

FIG. 4 is a diagram illustrating a method for collecting and reporting cell measurement information according to embodiments of the disclosure.

Referring to FIG. 4, a UE 405 may switch from idle mode (not shown) or inactive mode 410 to connected mode 415. In the connected mode 415, MDT data may be collected and reported to a base station via the immediate MDT operation. The UE 405 switched to the connected mode 415 may receive logged MDT configuration information performed in the idle mode or inactive mode 410 from the base station (420). The UE 405 may receive the logged MDT configuration information included in a predetermined RRC message. The UE 405 receiving the RRC message may start a first timer (or T330) (455). When switching to the idle mode or inactive mode 410, the UE 405 may perform the logged MDT operation (425) in the idle mode or inactive mode 410 interval until the first timer expires. The value of the first timer may be included in the logged MDT configuration information.

The UE 405 may store predetermined information collected at each configured period, logging interval 435 (430 and 445). In addition, when valid location information 440 is collected, the UE 405 may also store the valid location information 440. The location information may be determined to be valid for a predetermined time 450 after collecting the location information. The predetermined time may be shorter than or equal to the logged interval.

Even before the first timer expires, the UE 405 temporarily stops the logged MDT operation being performed when switching to the connected mode 415 (460). However, the first timer may not be stopped even during the connected mode 415 interval and may continue to operate. That is, the first timer may continue to operate regardless of whether the RRC state of the UE 405 is changed. However, when the memory of the UE 405 storing MDT data is insufficient and no longer stored, or when the logged MDT configuration information is released, the first timer may be stopped. The logged MDT configuration information may be released when other logged MDT configuration information is provided from a serving radio access technology (RAT) or another RAT, or when the UE 405 is detached or powered off.

During the connection establishment (RRC connection establishment) process or the connection resume (the RRC connection resume) process, the UE 405 may report to the base station that the UE has the collection information (e.g., MDT data) stored therein (465) by using the RRC setup complete message or the RRC resume complete message. The UE 405 may also report to the base station that the UE has the collection information (e.g., MDT data) stored in the UE (availability) by using the RRC re-establishment complete message or the RRC reconfiguration complete message.

The connection establishment process may be a process in which the UE 405 switches from idle mode to connected mode 401. As described below, it may consist of a three-step process, and three types of RRC messages may be used.
- Step 1: The UE transmits an RRC setup request message to the base station
- Step 2: The base station transmits an RRC setup message to the UE
- Step 3: The UE transmits an RRC setup complete message to the base station

The connection resume process may be a process in which the UE 405 switches from inactive mode 410 to connected mode 415. As described below, it may consist of a three-step process, and three types of RRC messages may be used.
- Step 1: The UE transmits an RRC resume request message to the base station
- Step 2: The base station transmits an RRC resume message to the UE
- Step 3: The UE transmits an RRC resume complete message to the base station

The UE 405 may report information indicating that it has collected information to the target base station during the connection establishment process or connection restart process, as well as during the connection re-establishment process (RRC connection re-establishment) or handover process. If the logged MDT is configured but there is no information collected and stored, the UE 405 may skip the report. The base station that receives the report may request a report of the MDT data stored by the UE 405 when necessary. The UE 405 may continue to store unreported MDT data for a predetermined period of time.

If the UE 405 is switched back to the idle mode or the inactive mode 410 and the first timer has not yet expired, the UE 405 may restart the logged MDT operation (470). When the first timer expires, the UE 405 may stop the logged MDT operation (475). The UE 405 that has stopped the logged MDT operation may start the second timer (480), and may maintain the stored MDT data until the second timer expires. After the second timer expires, whether to delete the stored MDT data may be determined by the UE 405 implementation. The value of the second timer may be included in the logged MDT configuration information, or a predefined value may be applied without being configured.

When the UE 405 is switched back to the connected mode 415, the UE 405 may report to the base station that the UE has the collected information (e.g., MDT data) stored therein (485). The base station may request the UE 405 to report the MDT data stored therein (retrieval) by using a predetermined RRC message (490).

The UE 405 may report a predetermined RRC message including MDT data in storage to the base station (495).

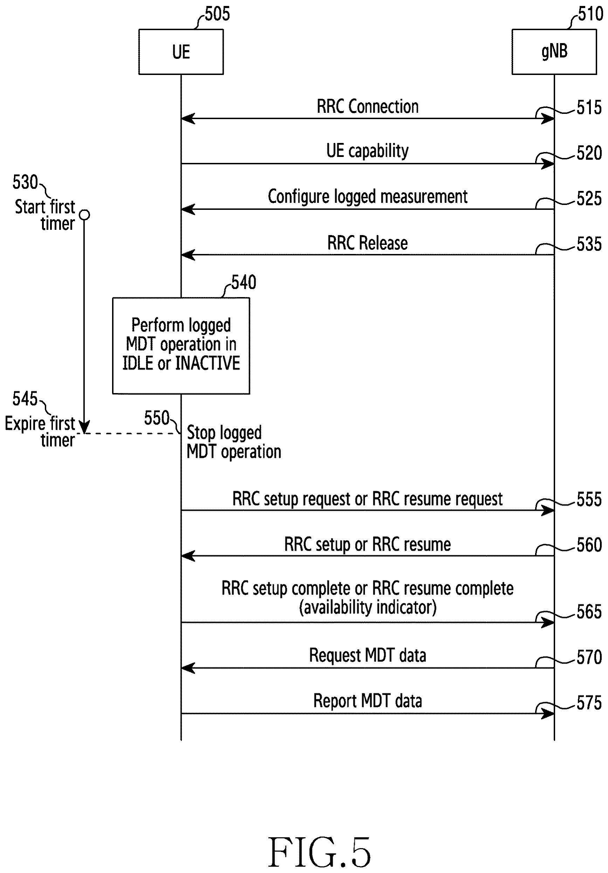

FIG. 5 is a diagram illustrating an operation for collecting and reporting cell measurement information according to embodiments of the disclosure.

Referring to FIG. 5, in step 515, a UE 505 may establish an RRC connection with a base station 510.

In step 520, the UE 505 may transmit UE capability information to the base station 510. The UE capability information may include at least one of information on whether the UE supports the MDT operation or whether the UE may measure a certain frequency.

In step 525, the base station 510 may transmit a predetermined RRC message including configuration information necessary to perform the logged MDT operation to the UE 505. In an embodiment of the disclosure, the configuration information may include at least one of the following information.
- trace reference information
- trace recording session reference information
- Trace collection entity (TCE) ID information: The base station may transmit MDT data information reported from the UE to a data server designated as a TCE ID.
- Absolute time information: Absolute time in the current cell providing the logged MDT configuration information
- Area configuration: Via the logged MDT operation, area information capable of collecting and storing measurement information may be indicated in units of cells. In addition, RAT information for collecting measurement information may be included.
- Logging duration: Value of the first timer, where the UE may perform the logged MDT operation in the idle mode or in the inactive mode when the timer is running.
- Logging interval: may be the period for storing the collected information.
- Plmn-IdentityList (i.e., MDT public land mobile network (PLMN) list): PLMN list information, where the UE may store PLMN information that may perform not only the logged MDT operation but also report whether MDT data is stored and report MDT data.
- An indicator indicating whether the UE performs the Logged MDT operation in idle mode or inactive mode or both: The indicator may indicate an RRC state that performs the Logged MDT operation, or, it may be defined as always performing the logged MDT operation in idle mode and inactive mode without an indicator. The UE may perform the logged MDT operation only in the RRC state indicated by the indicator.
- Indicator indicating whether to collect and store beam level measurement information: In a wireless communication system, a beam antenna may be applied. It may be defined as always collecting and storing beam level measurement results for frequencies that perform beam-based operations without an indicator.
- Information on the maximum number of beams to be collected or stored, and information on the minimum signal strength of the beams to be stored: The UE may omit to store information on beams weaker than the minimum signal strength. If all beams are weaker than the configured minimum signal value, the UE may store one piece of beam information having the strongest signal strength, or may include an indicator indicating that all beams are weaker than the configured minimum signal value.
- Indicator indicating whether the MDT retrieval operation may be triggered in the two-step restart process (RRC Resume)

In step 530, the UE 505 receiving the logged MDT configuration information may drive the first timer. The value of the first timer may be configured to be the same as the value of the logging duration.

In step 535, the base station 510 may switch the UE 505 to idle mode or inactive mode by using the RRC release message. Depending on which RRC state to switch to, the RRC Release message may include configuration information for an operation in the RRC state.

In step 540, if the first timer is running, the UE 505 may perform the logged MDT in the idle mode or in the inactive mode. The signal strength of the serving cell and neighboring cells may be measured, and location information may be acquired. When the beam level measurement is configured, the UE 505 may collect and store a signal strength value for a beam greater than the minimum value configured in the serving cell and the neighboring cell. The maximum number of beams that may be stored may also be configured or predefined. The signal strength may mean reference signal received power (RSRP), reference signal received quality (RSRQ), or signal to interference noise ratio (SINR). The UE 505 may store the collected information at every logged interval period. Each log information stored for each period may include an indicator indicating whether the stored information is collected in the idle mode or in the inactive mode. In an embodiment of the disclosure, an indicator may be included for each initial log in which the mode is switched. According to an embodiment of the above-described method, signaling overhead due to an indicator may be minimized.

In steps 545 and 550, when the first timer expires, the UE 505 may stop the logged MDT operation. When the UE 505 is in idle mode or inactive mode by the RRC Release message, receives RAN or core network (CN) paging from the base station, or MO data transmission is activated, the UE 505 may initialize an establishment process or a resume process for switching from idle mode or inactive mode to connected mode.

The establishment process or resume process may be configured as follows.
- Step 1 (555): The UE transmits an RRC setup request message or an RRC resume request message to the base station
- Step 2 (560): The base station transmits an RRC setup message or an RRC resume message to the UE
- Step 3 (565): The UE transmits an RRC setup complete message or an RRC resume complete message to the base station

The UE 505 may include an indicator indicating whether there is MDT data stored therein (availability) in the RRC setup complete or RRC resume complete message.

In step 570, the base station 510 receiving the RRC setup complete message may request the report of MDT data (retrieval) by using a predetermined RRC message when necessary (570).

In step 575, the UE 505 receiving the request may report MDT data by using a predetermined RRC message.

The NR system may activate a quality of experience (QoE) measurement by performing a signaling-based procedure or a management-based procedure.

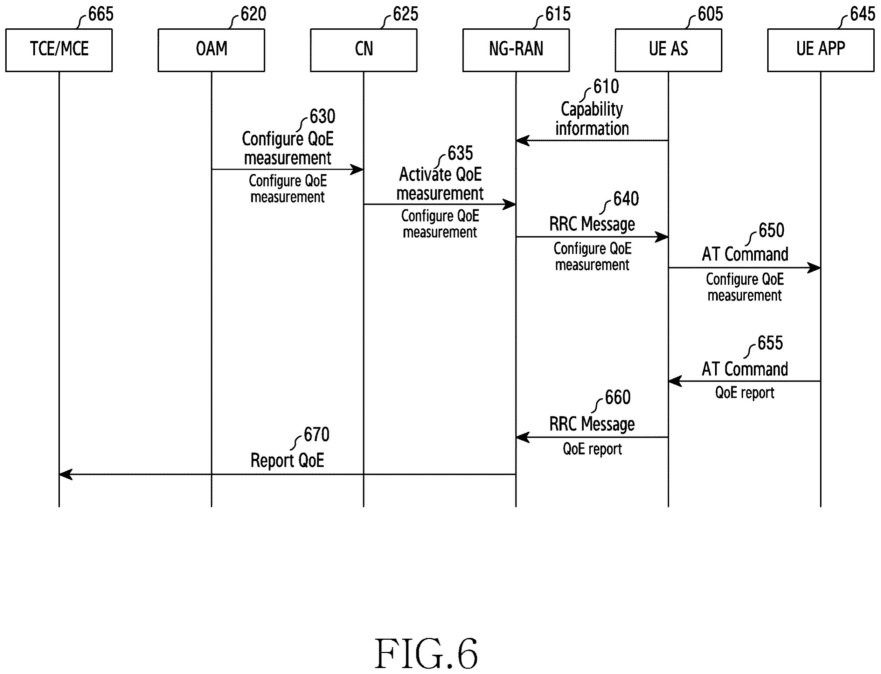

FIG. 6 is a flowchart illustrating a procedure for configuring and/or reporting signaling-based QoE measurement according to embodiments of the disclosure.

Referring to FIG. 6, a UE access stratum (AS) 605 may transmit information (e.g., at least one of qoe-Streaming-MeasReport, qoe-MTSI-MeasReport, or qoe-VR-MeasReport) indicating whether QoE measurement is supported for each service type (e.g., at least one of streaming, multimedia telephony service for IP multimedia subsystem (IMS) (MTSI), or VR) to a base station (or NG-RAN) 615 via a UE capability message (e.g., UECapabilityInformation) (610). Before transmitting the UE capability message, the base station may transmit a message regarding a request for the UE capability message (e.g., UECapabilityEnquiry). In addition, the UE may report to the base station whether RAN visible QoE measurement is supported for each service type (e.g., streaming, VR) (e.g., at least one of the following: ran-VisableQoE-Streaming-MeasReport or ran-VisableQoE-VR-MeasReport) via the UE capability message. In addition, the UE may report whether UL RRC segmentation is supported for the QoE report message (e.g., ul-MeasurementReportAppLayer-Seg) via the UE capability message. The UE capability message may include ASN.1 information of Table 2 and descriptions of related parameters of Table 3.

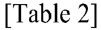

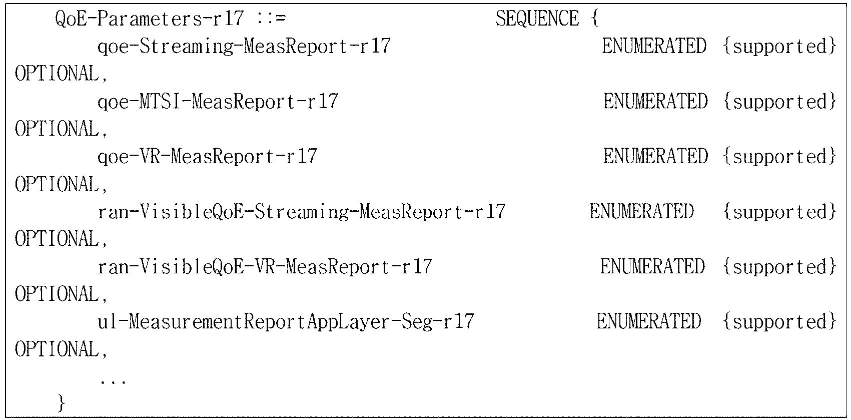

**[Table 3]**

| 4.2.20 QoE measurement parameters | | | | |
|---|---|---|---|---|
| Definitions for parameters | Per | M | FDD-TDD DIFF | FR1-FR2 DIFF |
| **qoe-Streaming-MeasReport-r17** | UE | No | No | No |
| Indicates whether the UE supports NR QoE measurement Collection for streaming services, see TS 26.247 [29]. | | | | |
| **qoe-MTSI-MeasReport-r17** | UE | No | No | No |
| Indicates whether the UE supports NR QoE measurement Collection for MTSI services, see TS 26.114 [30]. | | | | |
| **qoe-VR-MeasReport-r17** | UE | No | No | No |
| Indicates whether the UE supports NR QoE measurement collection for VR services, see TS 26.118 [31]. | | | | |
| **ran-VisibleQoE-Streaming-MeasReport-r17** | UE | No | No | No |
| Indicates whether the UE supports RAN visible QoE measurement Collection for streaming Services. | | | | |
| **ran-VisibleQoE-VR-MeasReport-r17** | UE | No | No | No |
| Indicates whether the UE supports RAN visible QoE measurement Collection for VR Services. | | | | |
| **ul-MeasurementReportAppLayer-Seg-r17** | UE | No | No | No |
| Indicates whether the UE supports RRC segmentation of the MeasurementReportAppLayer message in UL, as specified in TS 38.331 [9]. | | | | |

The types of services that may be supported in LTE include streaming and multimedia telephony service for IP multimedia subsystem (IMS) (MTSI), and additionally, the NR system additionally defines support for virtual reality (VR) in Rel-17, and may additionally support multimedia broadcast multicast services (MBMS) and extended reality (XR) in future releases. Of course, it is not limited to the above example.

According to an embodiment of the disclosure, an operations administration and maintenance (OAM) 620 may provide a core network (CN) 625 with QoE measurement configuration information (630). The CN receiving the configuration information may activate QoE measurement by transmitting the configuration information to the base station (635). The base station receiving the configuration information may transmit the QoE configuration information to the UE AS via an RRC message (e.g., an RRC reconfiguration or an RRC resume message) (640). The RRC message may include an information element (IE) (e.g., APPLlayerMeasConfig) as shown in Table 4 below, and descriptions for related parameters may be shown in Tables 5 and 6.

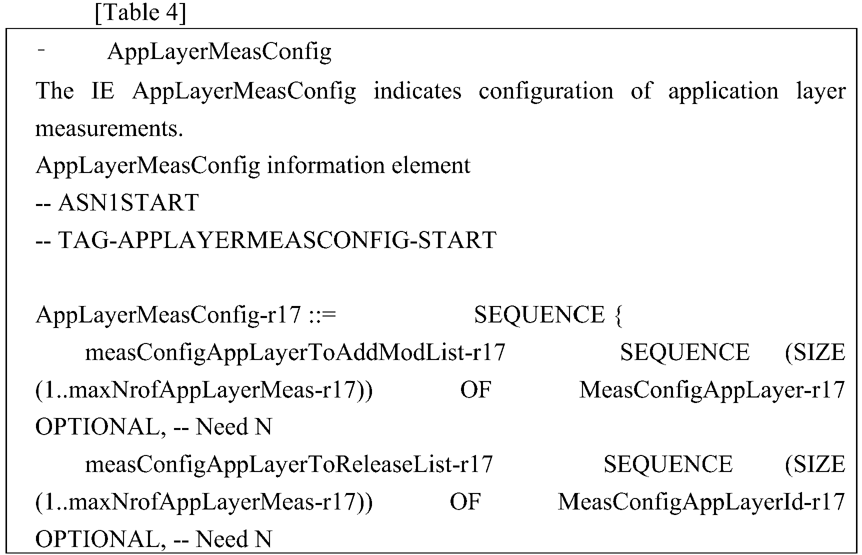

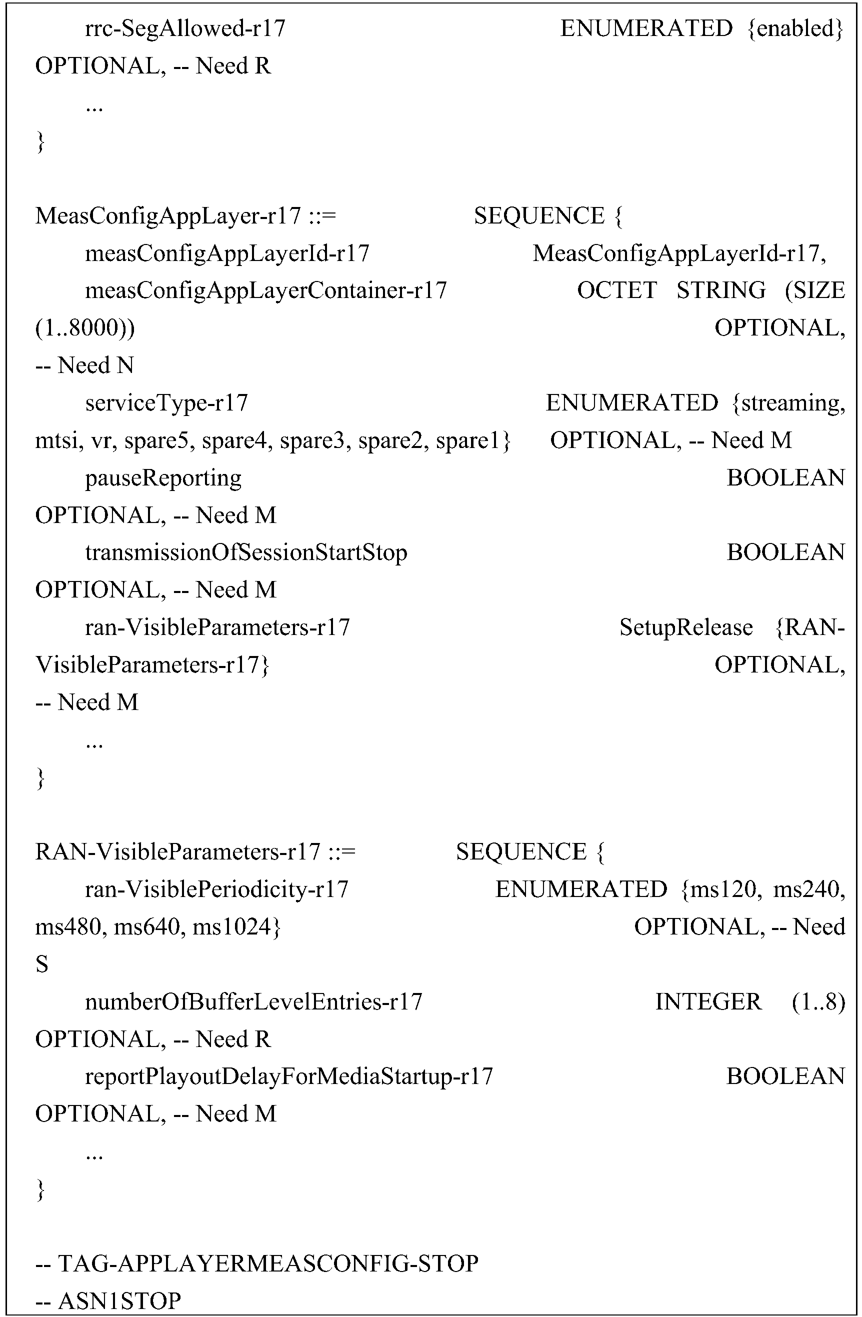

**[Table 5]**

| ***AppLayerMeasconfig field descriptions*** |
|---|
| **measConfigAppLayerContainer** |
| The field contains configuration of application layer measurements, see Annex L (normative) in TS 26.247 [68], clause 16.5 in TS 26.114 [69] and TS 26.118 [70]. |
| **pauseReporting** |
| The field indicates whether the transmission of MeasurementReportAppLayerContainer is paused or not. |
| **ran-VisibleParameters** |
| The field indicates whether RAN visible application layer measurements shall be reported or not. The field is optionally present when serviceType is set to streaming or vr. Otherwise, it is absent. |
| **rre-SegAllowed** |
| The field indicates that RRC segmentation of MeasurementReportAppLayer is allowed. It may be present only if the UE supports RRC segmentation of the MeasurementReportAppLayer message in UL. |
| **serviceType** |
| Indicates the type of application layer measurement. Value streaming indicates Quality of Experience Measurement Collection for streaming services (see TS 26.247 [68]), value mtsi indicates Quality of Experience Measurement Collection for MTSI (see TS 26.114 [69]), value vr indicates Quality of Experience Measurement Collection for VR service (see TS 26.118 [70]). The network always configures service Type when application layer measurements are initially configured and fullConfig. |
| **transmissionOfSessionStartStop** |
| The field indicates whether the UE shall transmit indications when sessions in the application layer start and stop. The UE transmits a session start indication upon configuration of this field if a session already has started in the application layer. |

**[Table 6]**

| ***RAN-VisibleParameters field descriptions*** |
|---|
| **numberOfBufferLevelEntries** |
| The field contains the maximum number of buffer level entries that can be reported for RAN visible application layer measurements. |
| **ran-VisiblePeriodicity** |
| The field indicates the periodicity of RAN visible reporting. Value ms120 indicates 120 ms, value ms240 indicates 240 ms and so on. |
| **reportPlayoutDelayForMediaStartup** |
| The field indicates whether the UE shall report Playout Delay for Media Startup for RAN visible application layer measurements. |

The operation of the UE AS receiving this may be as shown in Table 7 below.

**[Table 7]**

| | | | | |
|---|---|---|---|---|
| 5.3.5.13d Application layer measurement configuration | | | | |
| The UE shall: | | | | |
| | 1> if *measConfigAppLayerToReleaseList* is included in *appLayerMeasConfig* within *RRCReconfiguration* or *RRCResume:* | | | |
| | | 2>for each *measConfigAppLayerld* value included in the *measConfigAppLayerToReleaseList:* | | |
| | | | 3> forward the *measConjigAppLayerId* and inform upper layers about the release of the application layer measurement configuration including any RAN visible application layer measurement configuration; | |
| | | | 3> discard any application layer measurement report received from upper layers; | |
| | | | 3> consider itself not to be configured to send application layer measurement report for the *measConfigAppLayerId.* | |
| | 1>if *measConfigAppLayerToAddModList* is included in *appLayerMeasConfig* within *RRCReconfiguration* or *RRCResume:* | | | |
| | | 2> for each *meαsConfigAppLayerId* value included in the *measConfigAppLayerToAddModList*: | | |
| | | | 3>if *measConfigAppLayerContainer* is included for the corresponding *MeasConfigAppLayer* configuration: | |
| | | | | 4> forward the *measConfigAppLayerContainer*, the *measConfigAppLayerId* and the *serviceType* to upper layers considering the *serviceType;* |
| | | | 3>consider itself to be configured to send application layer measurement report for the *measConfigAppLayerId* in accordance with 5.7.16; | |
| | | | 3> forward the *transmissionOfSessionStartStop,* if configured, and *measConfigAppLayerld* to upper layers considering the *serviceType;* | |
| | | | 3> if *ran-VisibleParameters* is set to setup and the parameters have been received: | |
| | | | | 4> forward the *measConfigAppLayerId,* the *ran-VisiblePeriodicity*, if configured, the *numberOfBufferLevelEntries,* if configured, and the *reportPlayoutDelayForMediaStartup*, if configured, to upper layers considering the *serviceType*; |
| | | | 3>else if *ran-VisibleParameters* is set to release: | |
| | | | | 4> forward the *measConfigAppLayerId* and inform upper layers about the release of the RAN visible application layer measurement configuration; |
| | | 3>if*pauseReporting* is set to *true:* | | |
| | | | 4>if at least one segment, but not all segments, of a segmented *MeasurementReportAppLayer* message containing an application layer measurement report associated with the *measConfigAppLayerld* has been submitted to lower layers for transmission: | |
| | | | | 5> submit the remaining segments of the *MeasurementReportAppLayer* message to lower layers for transmission; |
| | | | 4> suspend submitting application layer measurement report containers to lower layers for the application layer measurement configuration associated with the *measConfigAppLayerId;* | |
| | | | 4> store any previously or subsequently received application layer measurement report containers associated with the *measConfigAppLayerId* for which no segment, or full message, has been submitted to lower layers for transmission; | |
| | | 3>else if *pauseReporting* is set to *false* and if transmission of application layer measurement report containers has previously been suspended for the application layer measurement configuration associated with the *measConfigAppLayerId*: | | |
| | | | 4> submit stored application layer measurement report containers to lower layers, if any, for the application layer measurements configuration associated with the *measConfigAppLayerld;* | |
| | | | 4> resume submitting application layer measurement report containers to lower layers for the application layer measurement configuration associated with the *measConfigAppLayerId*; | |
| | NOTE 1: The UE may discard reports when the memory reserved for storing application layer measurement reports becomes full. | | | |
| | NOTE 2: The transmission of RAN visible application layer measurement reports is not paused when *pauseReporting* is set to *true.* | | | |

As described above, for QoE measurement configurations included in measConfigAppLayerToAddModList, the AS layer of the UE may transmit configuration information to the upper layer or application layer (UE APP) 645 of the UE via the AT command (650). For QoE measurement configurations included in measConfigAppLayerToAddModList, the AS layer of the UE may transmit the AT command to delete stored configuration information to the UE APP.

The UE APP may perform QoE measurement according to the received configuration information. In addition, the UE APP may report the measurement result to the UE AS via an AT command according to the configuration information

(655). The UE AS receiving the AT command may report the measurement result to the base station via an RRC message (e.g., MeasurementReportAppLayer message)

(660). The UE AS may use signaling radio bearer 4 (SRB4) to report the QoE measurement result. The MeasurementReportAppLayer message may include ASN.1 information according to Table 8 below and parameter description according to Table 9.

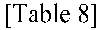

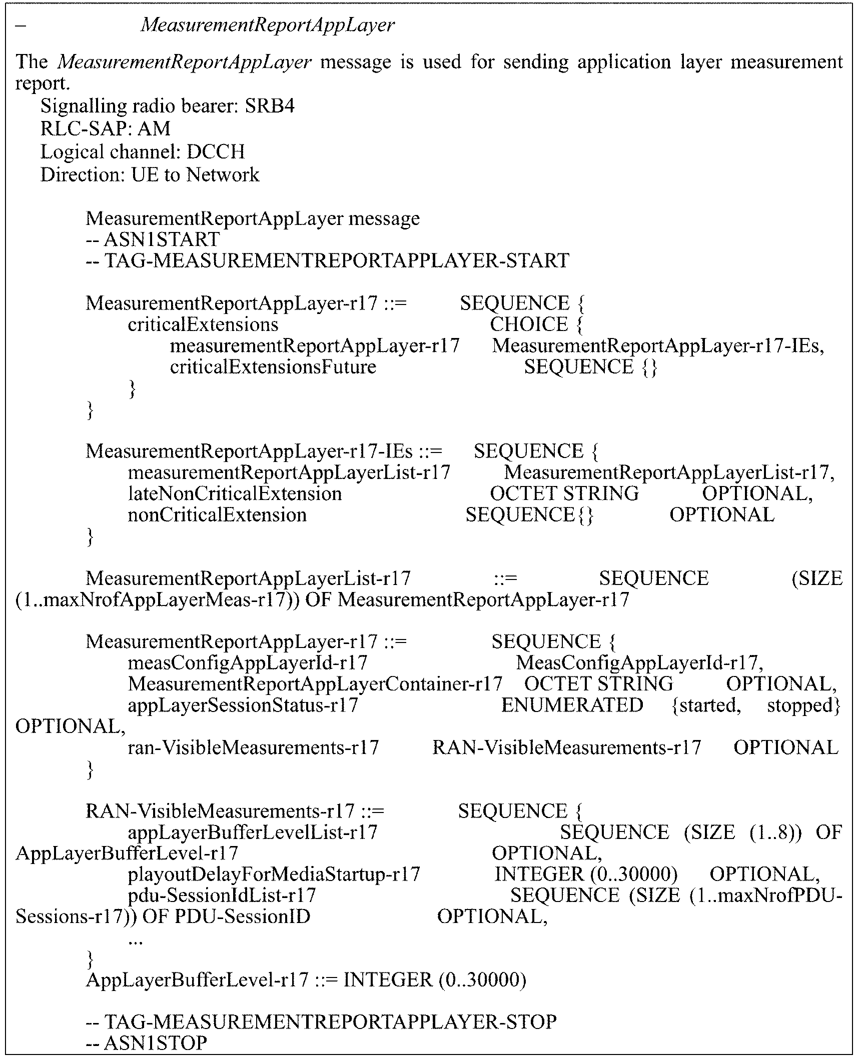

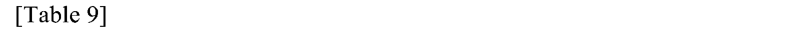

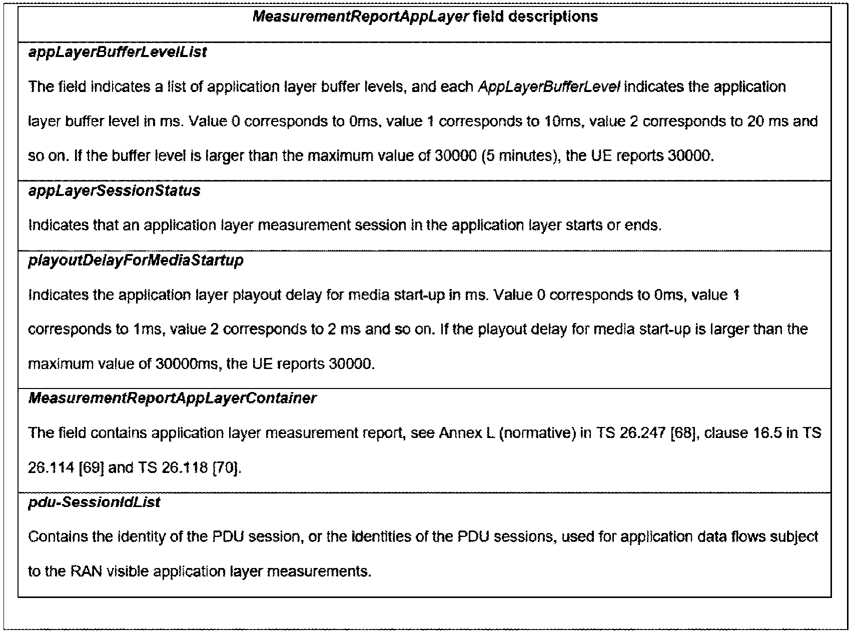

The QoE measurement result report procedure of the UE AS may be shown in Table 10 below.

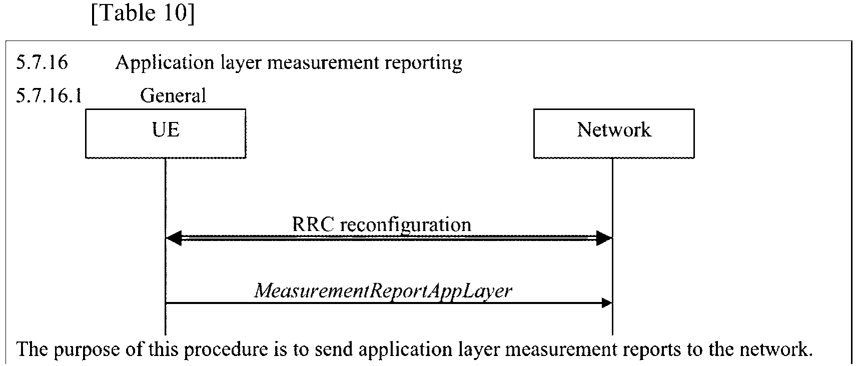

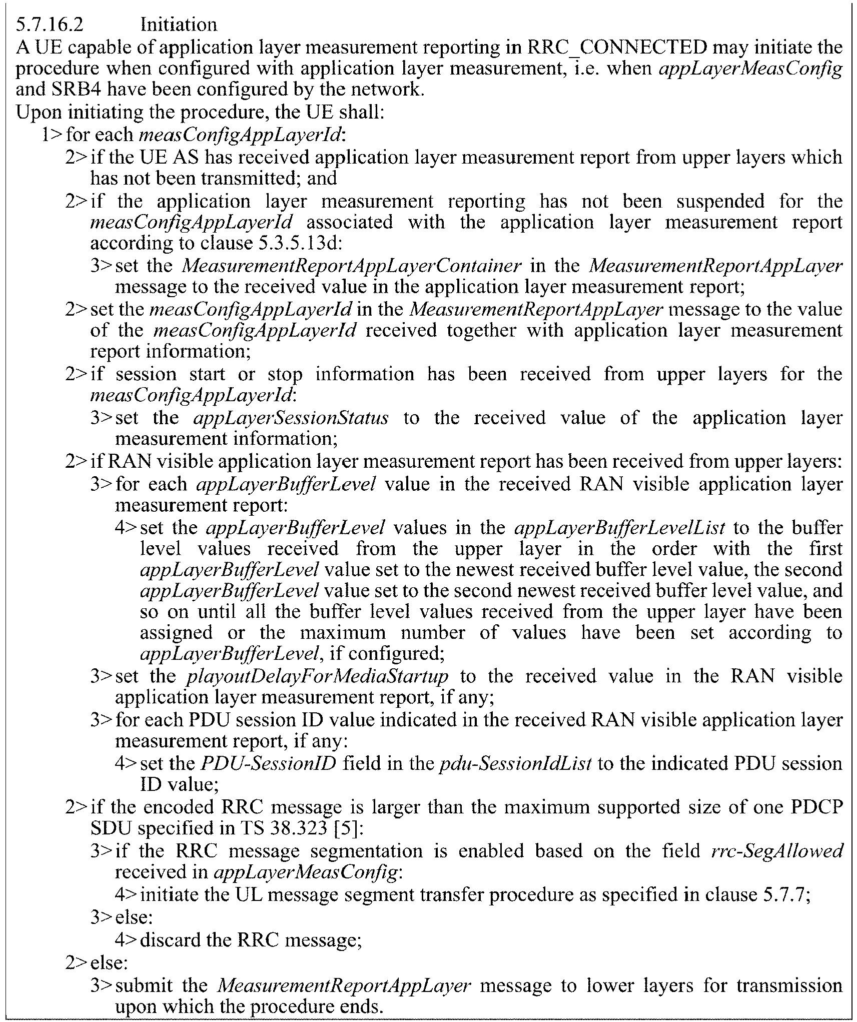

The base station may transmit the measurement result report to a final server (TCE or measurement collect entity (MCE)) 665 that collects the measurement report

(670).

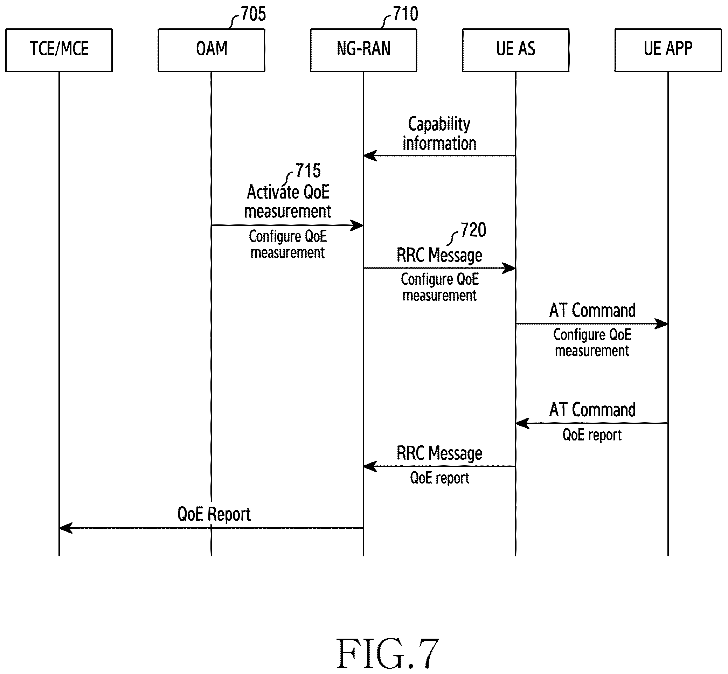

FIG. 7 is a flowchart illustrating a procedure for configuring and/or reporting management-based QoE measurement according to embodiments of the disclosure.

Referring to FIG. 7, the management-based QoE configuration and/or reporting procedure may be similar to the signaling-based procedure (e.g., FIG. 6). Therefore, only the differences in the management-based method may be described in the disclosure, and other procedures and descriptions may be the same as the description regarding FIG. 6. In the management-based method, an OAM 705 may activate QoE measurement by directly transmitting the QoE measurement configuration to a base station 710 without going via a CN (715). The base station receiving the QoE measurement configuration may find a single or multiple UEs that meet multiple conditions (e.g., at least one of area scope, application layer capability, or service type). In addition, the base station may transmit the QoE measurement configuration to each UE via an RRC message (e.g., an RRC reconfiguration message or an RRC resume) (720). Other procedures and message formats may be considered to be identical to the description of FIG. 6 (signaling-based method).

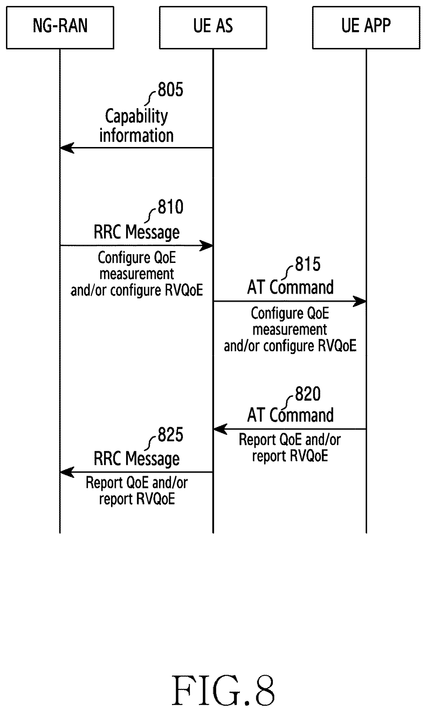

FIG. 8 is a flowchart illustrating a procedure for configuring and reporting RAN visible QoE (RVQoE) measurement according to embodiments of the disclosure.

Referring to FIG. 8, the QoE measurement described in FIGS. 6 and 7 may be configured by OAM, and the QoE measurement report generated according to the OAM configuration may be collected by TCE/MCE, and the service provider may use the QoE measurement report for network optimization. When a UE transmits a report on OAM-based QoE measurement to a base station and the base station receives the report on the OAM-based QoE measurement, the base station may have difficulty in reading or understanding the measurement report. In the MeasurementReportAppLayer message, a measurement report generated by the application layer of the UE may be included in the measurementReportAppLayerContainer, but since the measurement report is stored in the form of OCTEC STRING, it may be difficult for the base station or the RRC layer of the base station to read or understand the measurement report. To address the problem of difficulty in reading or understanding the measurement report, RAN visible QoE (e.g., RVQoE) measurement is defined and introduced in 3GPP in order for base station to read the QoE measurement report and utilize the same for network optimization such as radio resource management. The RVQoE measurement may be defined to be limited to a specific service type (e.g., at least one of streaming or VR). First, the UE may report to the base station whether the RVQoE measurement is supported by service type (e.g., at least one of streaming or VR) (805). In this case, a UECapabilityInformation message may be used. For example, for a streaming service, the UE may include or configure the ran-VisibleQoE-Streaming-MeasReport parameter in the UECapabilityInformation message, and for a VR service, the UE may include or configure the ran-VisibleQoE-VR-MeasReport parameter. By including or configuring the parameter by the UE, the base station may identify whether the UE supports RVQoE measurement by service type, and by identifying whether the UE supports RVQoE measurement by service type, the base station may generate an RVQoE measurement configuration and transmit the same to the UE (810). In this case, the RVQoE measurement configuration may be transmitted together with the OAM-based QoE measurement configuration. The RVQoE measurement configuration may be included in the RRCReconfiguration or RRCResume message. The base station may instruct the UE to set up or release the RVQoE measurement via setup or release of the RAN-VisibleParameters parameter in the AppLayerMeasConfig IE. The parameter may include the RAN-VisibleParameters IE, and the base station may provide some or all of the following parameters to the UE via the RAN-VisibleParameters IE.
- RVQoE measurement report period (e.g., ran-VisiblePeriodicity): The UE AS or UE APP may transmit RVQoE measurement reports every period.
- Maximum number of buffer levels that may be reported (e.g., numberOfBufferLevelEntries): The UE AS or UE APP may include multiple buffer levels when reporting RVQoE measurements, and may include buffer levels in numbers less than or equal to the configured value.
- Whether to report playout delay at media start (e.g., reportPlayoutDelayForMediaStartup): If the value of whether to report playout delay at media start is indicated as true, the UE AS or UE APP may include playout delay at media start in the RVQoE report and send the same. If the value of whether to report playout delay at media start is indicated as false, the UE may not include playout delay at media start in the RVQoE report.

The UE AS layer may transmit the above-described configuration information to the UE APP layer (815). In this case, the RVQoE measurement configuration may be transmitted together with the OAM-based QoE measurement configuration. The UE APP may perform QoE measurement based on the RVQoE measurement configuration information to generate an RVQoE measurement report and transmit the generated RVQoE measurement report to the UE AS layer (820). In this case, the RVQoE measurement report may be transmitted together with the OAM-based QoE measurement report. The AS layer of the UE receiving the RVQoE measurement report may transmit the RVQoE measurement report to the base station (825). In this case, the RVQoE measurement report may be transmitted together with the OAM-based QoE measurement report. In 825, the RVQoE measurement report may be transmitted via RAN-VisibleMeasurements IE in MeasurementReportAppLayer message, and the RAN-VisibleMeasurements IE may include some or all of the following parameters.
- APP layer buffer level list (e.g., appLayerBufferLevelList): The APP layer buffer level list may include multiple buffer levels measured by the UE APP. The number included by numberOfBufferLevelEntries in the RVQoE configuration may be limited.
- playout delay (e.g., playoutDelayForMediaStartup): The playout delay may indicate the playout delay in ms when the media starts. The UE may include the playout delay parameter if reportPlayoutDelayForMediaStartup in the RVQoE configuration is configured to true.
- Protocol data unit (PDU) session ID list (e.g., pdu-SessionIdList): The PDU session ID list may indicate the PDU session(s) used for the application data flow that is the target of RVQoE measurement. The base station may identify which PDU session(s) has measured RVQoE values (e.g., buffer level and playout delay) via the PDU session ID list, and may optimize resource allocation and scheduling for the corresponding PDU session(s) based on which PDU session(s) has measured RVQoE values (e.g., buffer level and playout delay).

The base station may read the RVQoE report and use the RVQoE report to perform network optimization. For example, the base station may improve QoE of the corresponding UE by allocating a larger amount of radio resources to the UE experiencing poor QoE for a specific service.

In the LTE system, QoE measurement (e.g., description of FIGS. 6 and 7) may be supported only in a connected mode (RRC_CONNECTED). On the other hand, the NR system may support QoE measurement even in inactive mode (RRC_INACTIVE) or idle mode (RRC_IDLE) for multimedia broadcast multicast services (MBMS) or multicast/broadcast services (MBS). In the future, the NR system may support QoE measurement in inactive and idle modes for various service types as well as MBS.

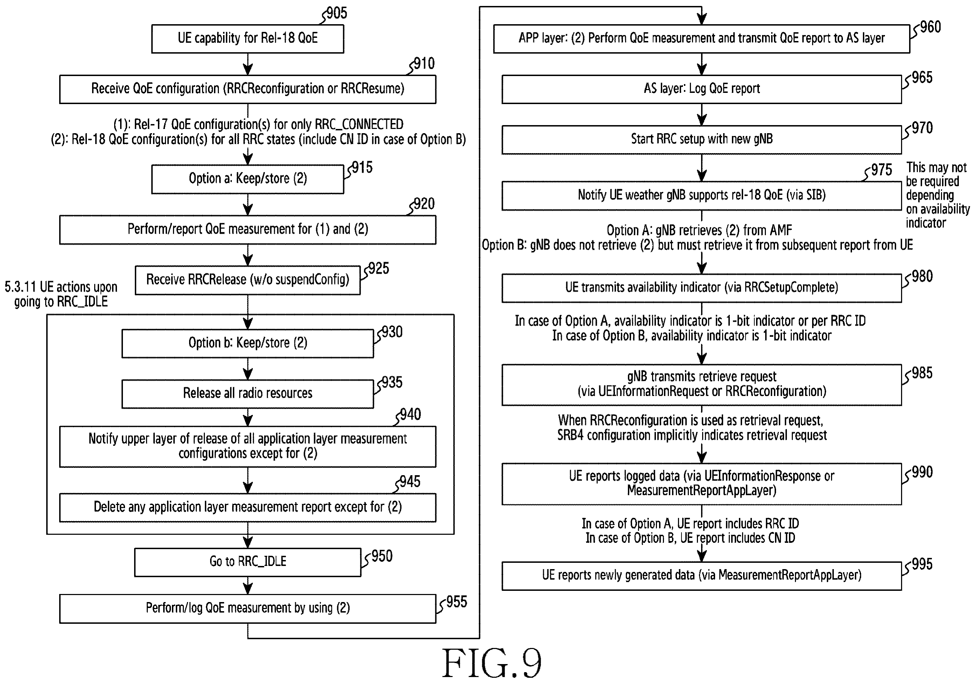

FIG. 9 is a diagram illustrating a procedure for a idle mode UE to store QoE measurement results in an AS layer, as an embodiment of the disclosure.

In step 905, the UE may transmit some of the following information (or capability of the UE) to the base station via a UECapabilityInformation message.
- Information 1. Capability of the UE to support QoE measurement in inactive and idle modes: This information may be included in the form of "ENUMERATED {supported}" as a parameter in the AppLayerMeasParameters in the UECapabilityInformation message and may be an optional field. When the UE supports QoE measurement in the inactive mode and idle mode, the UE may transmit the UECapabilityInformation message by including the corresponding parameter in the UECapabilityInformation message to the base station. When the UE does not support QoE measurement in the inactive mode and idle mode, the UE may transmit the UECapabilityInformation message without the corresponding parameter to the base station.
- Information 2. Capability of the UE to support QoE measurement in all RRC states: This information may be included in the form of "ENUMERATED {supported}" as a parameter in the AppLayerMeasParameters in the UECapabilityInformation message and may be an optional field. When the UE supports QoE measurement in all RRC states, the UE may transmit the UECapabilityInformation message by including the corresponding parameter in the UECapabilityInformation message to the base station. When the UE does not support QoE measurement in all RRC states, the UE may transmit the UECapabilityInformation message without the corresponding parameter to the base station.
- Information 3. Capability of the UE to support QoE measurement for MBS services: This information may be included in the form of "ENUMERATED {supported}" as a parameter in the AppLayerMeasParameters in the UECapabilityInformation message and may be an optional field. When the UE supports QoE measurement for MBS services, the UE may transmit the UECapabilityInformation message by including the corresponding parameter in the UECapabilityInformation message to the base station. When the UE does not support QoE measurement for MBS services, the UE may transmit the UECapabilityInformation message without the corresponding parameter to the base station.
- Information 4. Capability of the UE to support QoE measurement for MBS broadcast services: This information may be included in the form of "ENUMERATED {supported}" as a parameter in the AppLayerMeasParameters in the UECapabilityInformation message and may be an optional field. When the UE supports QoE measurement for MBS broadcast services, the UE may transmit the UECapabilityInformation message by including the corresponding parameter in the UECapabilityInformation message to the base station. When the UE does not support QoE measurement for MBS broadcast services, the UE may transmit the UECapabilityInformation message without the corresponding parameter to the base station.

The UE may transmit the UECapabilityInformation message after receiving the UECapabilityEnquiry message from the base station.

In step 910, the UE may receive QoE configuration information from the base station (e.g., via the RRCReconfiguration or RRCResume message). The QoE configuration information may include (1) configuration information for QoE measurement only in the connected mode (QoE configuration information defined in Release 17), as well as (2) configuration information for QoE measurement in the (connected mode/)inactive/idle mode. In the disclosure, these may be referred to as "QoE configuration (1)" and "QoE configuration (2)", respectively. The QoE configuration (1) may include one or more QoE configurations, and each may be distinguished by an RRC ID. The QoE configuration (2) may include one or more QoE configurations, and each may be distinguished by an RRC ID and/or a CN ID (for a description of the RRC ID and the CN ID, refer to the description below).

In Release 17 QoE, TCE/MCE, OAM, and CN (e.g., access and mobility management function (AMF)) may use an indicator called QoE reference as an ID to distinguish/indicate multiple QoE configuration information. In addition, the IP address (or QoE collection entity address) of the TCE/MCE for reporting the QoE measurement results for each QoE reference to the TCE/MCE may exist for each QoE reference. In the disclosure, the QoE reference and/or the TCE/MCE IP address may be referred to as the CN ID. However, since the number of bits of this CN ID is large, this size may be reduced between the base station and the UE and used for indicating QoE configuration and reporting. This may be defined as measConfigAppLayerId, and may be referred to as the RRC ID in the disclosure. The base station plays a role in mapping the CN ID and the RRC ID and may store the mapping. For example, OAM or CN (AMF) may transmit QoE configuration A and QoE configuration B to the base station, where the QoE configuration A may include CN ID 1 (QoE reference 1 and/or IP address 1 of TCE/MCE), and the QoE configuration B may include CN ID 2 (QoE reference 2 and/or IP address 2 of TCE/MCE).

The base station receiving the QoE configurations A and B may map CN ID 1 to RRC ID 1 (e.g., measConfigAppLayerId=1) and map CN ID 2 to RRC ID 2 (e.g., measConfigAppLayerId=2). Therefore, the base station may include RRC ID 1 when transmitting the QoE configuration A to the UE, and may include RRC ID 2 when transmitting the QoE configuration B. The UE may transmit QoE report 1 including the result measured with the QoE configuration A to the base station, and the QoE report 1 may indicate that it is the result measured by the QoE configuration A by including RRC ID 1. Similarly, the UE may transmit QoE report 2 including the result measured with the QoE configuration B to the base station, and the QoE report 2 may indicate that it is the result measured by the QoE configuration B by including RRC ID 2. The base station may store the mapping between RRC ID and CN ID, convert RRC ID 1 included in the received QoE report 1 into CN ID 1 to identify TCE/MCE IP address 1, and transmit the QoE report 1 including CN ID 1 to the corresponding TCE/MCE. Similarly, the base station may convert RRC ID 2 included in the received QoE report 2 into CN ID 2 to identify TCE/MCE IP address 2, and transmit the QoE report 2 including CN ID 2 to the corresponding TCE/MCE.

When Option B is used in step 975 (refer to description of step 975), in step 910, the base station (the base station in step 970, e.g., the base station A) with which the UE establishes a new RRC connection may not be able to recover and may not know the information on the QoE configuration (2) of the UE. That is, base station A may not know the CN ID information for the QoE configuration (2). Therefore, when the UE reports QoE measurement to base station A (e.g., 990) or transmits an availability indicator (e.g., 980), the UE may notify base station A of the CN ID by including the CN ID in the transmission, and for this purpose, in step 910, the base station (e.g., base station B) may transmit the CN ID to the UE by including the CN ID in the QoE configuration (2) (i.e., so that the UE may store and know the CN ID in advance).

In step 915, the UE may receive the QoE configuration (2) and then store the same (e.g., via an RRCReconfiguration or an RRCResume message) (Option a). This may be for performing QoE measurement without discarding or releasing the QoE configuration (2) after the UE receives RRCRelease or after transitioning to inactive/idle mode. As an embodiment of the disclosure, instead of performing the operation of Option a, the UE may perform the operation of Option b in 930.

In step 920, the UE may perform QoE measurement by using the QoE configuration (1) and/or the QoE configuration (2). In the connected mode, the UE may immediately transmit the QoE measurement report generated as a result of the QoE measurement to the base station. In this case, a MeasurementReportAppLayer message may be used.

In step 925, the UE may transition to the idle mode after receiving a RRCRelease message. To this end, the RRCRelease may not include suspendConfig.

As an embodiment of the disclosure, the UE may perform steps 930, 935, 940, and 945 in the process of transitioning the UE to the idle mode, which may be described in section 5.3.11 (UE actions up going to RRC_IDLE) in 3GPP standard document TS 38.331.

In step 930, the UE may store the QoE configuration (2) received via the RRCReconfiguration or RRCResume message (Option b). This may be for performing QoE measurement without discarding or releasing the QoE configuration (2) after the UE receives RRCRelease or after transitioning to inactive/idle mode. As an embodiment of the disclosure, instead of performing the operation of Option b, the UE may perform the operation of Option a in 915.

In step 935, the UE may release the radio resource and the configuration information. In this case, the QoE configuration information (1) may be released together. However, the QoE configuration information (2) may be stored or maintained without being released (e.g., according to the procedure in 915 or 930).

In step 940, the UE (RRC layer) may notify the upper layer or the application (APP) layer of release of all QoE configurations (e.g., QoE configuration (1)) except for the QoE configuration (2). Alternatively, the QoE configuration (1) may be notified of release, while the QoE configuration (2) may not be notified of release.

In step 945, the UE (RRC layer) may delete the QoE measurement report that has not yet been transmitted to the lower layer. However, the measurement report for QoE configuration (2) may be stored without being deleted. This is because the measurement report for QoE configuration (2) may be reported again when connected to a new base station in the future (e.g., via step 990 or step 995).

In step 950, the UE may transition to the idle mode.

In step 955, the UE may perform QoE measurement in the idle mode according to the stored QoE configuration (2) and store the measurement result.

In step 960, the APP layer of the UE may perform QoE measurement in the idle mode according to the QoE configuration (2) and transmit the measurement result report to the AS layer (RRC layer) of the UE. Step 960 may be a step included in step 955.

In step 965, the UE AS layer may store the QoE measurement result report received from the APP layer. Step 965 may be a step included in step 955.

In step 970, the UE may start RRC connection establishment (RRC setup) with a (new) base station.

In step 975, if some or all of the following conditions are satisfied, the base station may indicate this to the UE (e.g., via a system information block (SIB)) (e.g., by including a related parameter or configuring the value to true). Conversely, if some or all of the following conditions are not satisfied, the base station may indicate this to the UE by not including the related parameter or configuring the value to false.
- Condition 1. When the base station supports or allows Release 18 QoE feature
- Condition 2. When the base station supports or allows QoE measurement in idle/inactive modes
- Condition 3. When the base station supports or allows retrieval of QoE measurement results in idle/inactive modes

As an embodiment of the disclosure, step 975 may be omitted. For example, this is because the base station may indicate to the UE whether to allow or not to allow QoE measurement report of each UE by including or not including a retrieval request in step 985.

The (new) base station with which the UE establishes the RRC connection may not know the information on the QoE configuration (2). To solve this, the following two options may be considered.
- Whether UE or CN stores the network instance of QoE configuration when UE in the RRC_IDLE state needs further discussion.
   * Option 1 (CN-based solution): Old gNB stores the entire network instance QoE configuration at AMF before going to RRC_IDLE and new gNB retrieves the stored QoE configuration from AMF during reconnection.
   * Option 2 (UE-based solution): New gNB doesn't need to know the QoE configuration of old gNB upon reconnection. It is sufficient if new gNB is informed by UE via QoE report.

In the disclosure, the "Option 1 (CN-based solution)" is referred to as Option A. In the disclosure, the "Option 2 (UE-based solution)" is referred to as Option B. In Option A, the (new) base station with which the UE establishes an RRC connection may restore information on the QoE configuration (2) of the UE from the AMF. That is, the AMF may store information on the QoE configuration (2) when the UE transitions to the idle mode. In Option B, the (new) base station with which the UE establishes an RRC connection may restore information on the QoE configuration (2) (e.g., CN ID) via the QoE measurement report of the UE.

In step 980, the UE may transmit an availability indicator (QoE measurement report storage indicator) (e.g., included in an RRCSetupComplete message) during the RRC connection establishment process with the (new) base station when specific conditions (some or all of the conditions below) are satisfied.
- Condition 1. When the UE is storing QoE data or reports measured in inactive/idle mode
- Condition 2. When the UE is indicated by the base station that the base station satisfies the condition in step 975

The UE may indicate to the base station that the condition is satisfied by including a parameter regarding the availability indicator or configuring the same to true, and may indicate to the base station that the condition is not satisfied by not including the parameter regarding the availability indicator or configuring the same to false.

As an embodiment of the disclosure, the availability indicator may be indicated by RRC ID of QoE configuration. For example, in step 910, the UE may receive two QoE configurations (QoE configuration A and QoE configuration B) belonging to QoE configuration (2). QoE configuration A may have RRC ID 1. QoE configuration B may have RRC ID 2. Thereafter, in steps 960 and 965, the UE may perform QoE measurement for QoE configuration A and QoE configuration B, respectively, and store each measurement result separately (measurement result for QoE configuration A and measurement result for QoE configuration B).

In step 980, if the UE does not have a measurement result for QoE configuration A stored (e.g., if an MBS broadcast session for QoE configuration A is not serviced in the APP layer), but only stores a measurement result for QoE configuration B, the UE may not include the parameter regarding the availability indicator corresponding to RRC ID 1 or configure the same to false to indicate that there is no measurement result for QoE configuration A, and at the same time, the UE may include the parameter regarding the availability indicator corresponding to RRC ID 2 or may configure the same to true to indicate that a measurement result for QoE configuration B exists. As an embodiment of the disclosure, the UE may define/use the availability indicator parameter to include only the RRC ID(s) of the QoE configuration for which the measurement result is stored (in the above example, the UE may transmit RRC ID=2 as an availability indicator to the base station).

The above embodiment of indicating availability indicator by RRC ID of QoE configuration may be used in Option A. This is because, in Option A, the new base station with which the UE establishes an RRC connection may recover QoE configuration (2) (including the RRC ID configured by previous base station) that the UE had from AMF. Therefore, the new base station may understand the availability indicator by RRC ID of the UE.

In step 985, the base station may transmit a retrieval request for the stored QoE measurement results to the UE. The base station may transmit the retrieval request to the UE via a UEInformationRequest or RRCReconfiguration message. A parameter indicating the retrieval request in the UEInformationRequest or RRCReconfiguration message may be defined. If the corresponding parameter is included in the message or configured to true, it may indicate that a retrieval request is made, and if the corresponding parameter is omitted or configured to false, it may indicate that a retrieval request is not made. As an embodiment of the disclosure, after the UE transmits to the base station the fact that the UE is storing QoE measurement results via the availability indicator, the base station may transmit the retrieval request to the UE in response thereto. That is, the base station may recognize the fact that the UE is storing QoE measurement results and then request a retrieval of the measurement results or reports. In an embodiment, if the availability indicator is indicated by RRC ID, the retrieval request may also be indicated by RRC ID to indicate whether to request retrieval of QoE measurement results by RRC ID (whether to request or not to request).

In the case of an embodiment that defines the retrieval request in the RRCReconfiguration message, when the UE receives the RRCReconfiguration message that includes an SRB configuration (e.g., configuration of SRB4) for QoE measurement report, the UE may understand that the base station has transmitted the retrieval request and may transmit the stored QoE measurement report to the base station. Conversely, when the UE receives the RRCReconfiguration message that does not include an SRB configuration (e.g., configuration of SRB4) for QoE measurement report, the UE may understand that the base station has not transmitted the retrieval request and may not transmit the stored QoE measurement report to the base station.

In step 990, the UE may transmit the stored QoE measurement report to the base station. As an embodiment of the disclosure, the UE may perform the above operation after receiving the retrieval request from the base station. As an embodiment of the disclosure, when the base station transmits the retrieval request to the UE via the UEInformationRequest message, the UE may perform the stored QoE measurement report via the UEInformationResponse message. As an embodiment of the disclosure, when the base station transmits the retrieval request to the UE via the RRCReconfiguration message, the UE may transmit the stored QoE measurement report to the base station via the MeasurementReportAppLayer message. As an embodiment of the disclosure, when Option A is used, the UE may perform the QoE measurement report by RRC ID. For example, each QoE measurement report may include a corresponding RRC ID. As an embodiment of the disclosure, when Option B is used, the UE may perform the QoE measurement report by CN ID. For example, each QoE measurement report may include a corresponding CN ID.

In step 995, as an embodiment of the disclosure, the UE may continue to perform QoE measurement for QoE configuration (2) and generate a measurement report after transitioning to the connected mode. Since the UE is in the connected mode, the UE may immediately report this to the base station (without going via the steps 965 to 985). In this case, the UE may perform a QoE measurement report by using the MeasurementReportAppLayer message.

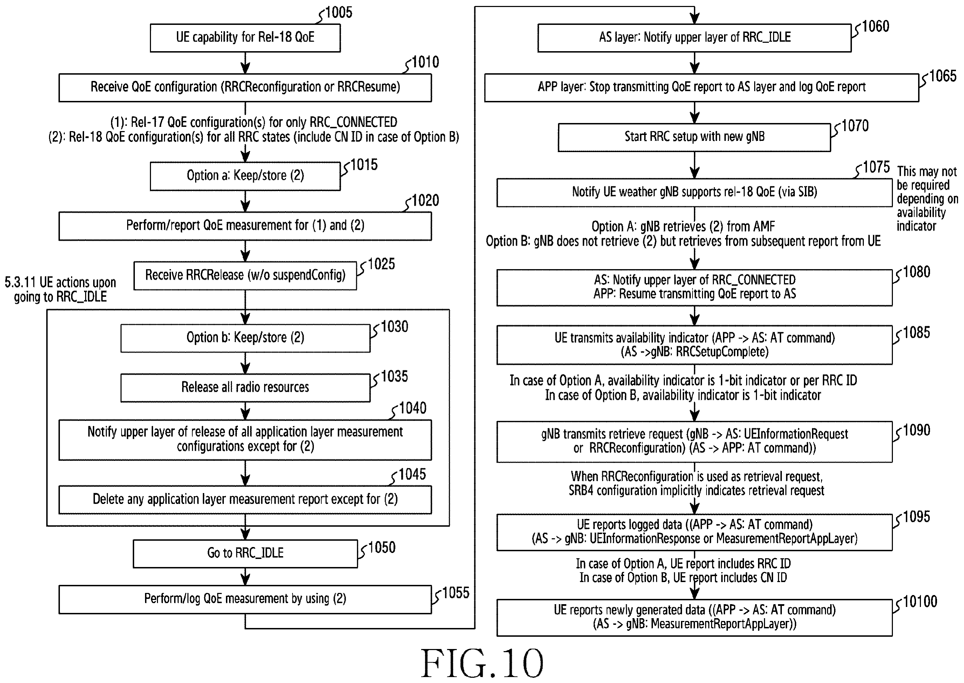

FIG. 10 is a diagram illustrating a procedure for a idle mode UE to store QoE measurement results in an AS layer, as an embodiment of the disclosure.

From step 1005 to 1055, the operations and related descriptions of the UE and base station may be the same as from step 905 to 955.

In step 1060, the UE AS layer (RRC layer) may transition to idle mode and then notify the upper layer or APP layer of some or all of the following information.
- Information 1. Indicator notifying RRC state transition to idle mode of UE AS layer
- Information 2. Indicator notifying RRC state transition to inactive mode or idle mode of UE AS layer
- Information 3. Indicator to stop transmitting QoE measurement report measured by UE APP layer to AS layer

The above information or indicator may be defined as AT command.

In step 1065, the UE APP layer may stop transmitting the measurement report generated according to QoE configuration (2) to the AS layer after receiving the above information, and may store the measurement report.

In step 1070, the UE may start RRC connection establishment (RRC setup) with a (new) base station.

In step 1075, if some or all of the following conditions are satisfied, the base station may indicate this to the UE (e.g., via an SIB) (e.g., by including a related parameter or configuring the value to true). Conversely, if some or all of the following conditions are not satisfied, the base station may indicate this to the UE by not including the related parameter or configuring the value to false.
- Condition 1. When the base station supports or allows Release 18 QoE feature
- Condition 2. When the base station supports or allows QoE measurement in idle/inactive modes
- Condition 3. When the base station supports or allows retrieval of QoE measurement results in idle/inactive modes

As an embodiment of the disclosure, step 1075 may be omitted. For example, this is because the base station may indicate to the UE whether to allow or not to allow QoE measurement report of each UE by including or not including a retrieval request in step 1090.

The (new) base station with which the UE establishes the RRC connection may not know the information on the QoE configuration (2). To solve this, the following two options may be considered.
- Whether UE or CN stores the network instance of QoE configuration when UE in the RRC_IDLE state needs further discussion.
   * Option 1 (CN-based solution): Old gNB stores the entire network instance QoE configuration at AMF before going to RRC_IDLE and new gNB retrieves the stored QoE configuration from AMF during reconnection.
   * Option 2 (UE-based solution): New gNB doesn't need to know the QoE configuration of old gNB upon reconnection. It is sufficient if new gNB is informed by UE via QoE report.

In the disclosure, the "Option 1 (CN-based solution)" is referred to as Option A. In the disclosure, the "Option 2 (UE-based solution)" is referred to as Option B. In Option A, the (new) base station with which the UE establishes an RRC connection may restore information on the QoE configuration (2) of the UE from the AMF. That is, the AMF may store information on the QoE configuration (2) when the UE transitions to the idle mode. In Option B, the (new) base station with which the UE establishes an RRC connection may restore information on the QoE configuration (2) (e.g., CN ID) via the QoE measurement report of the UE.

In step 1080, the UE AS layer (RRC layer) may transition to the connected mode and then notify the upper layer or the APP layer of some or all of the following information.
- Information 1. Indicator notifying UE AS layer of RRC state transition to connected mode
- Information 2. Indicator to resume transmitting QoE measurement report measured by UE APP layer to AS layer

After receiving the above information, the UE APP layer may resume the operation of transmitting the newly generated measurement report to the AS layer according to the QoE configuration (2).

In step 1085, if there is the QoE measurement report (not transmitted to the AS layer) measured and stored during the inactive/idle mode, the UE APP may transmit an availability indicator (QoE measurement report storage indicator) to the AS layer. The APP layer may indicate to the AS layer that there is a stored QoE measurement report by including a parameter related to the availability indicator or configuring the same to true, and may indicate to the AS layer that there is no stored QoE measurement report by not including a parameter related to the availability indicator or configuring the same to false. The availability indicator transmitted from the APP layer to the AS layer may be defined as an AT command.

The UE AS layer may transmit the availability indicator (QoE measurement report storage indicator) (e.g., by including the availability indicator in the RRCSetupComplete message) during the RRC connection establishment process with the (new) base station when specific conditions (some or all of the conditions below) are satisfied.
- Condition 1. When indicated by the UE APP layer that there is a stored QoE measurement report (e.g., via the availability indicator from the APP layer to the AS layer)
- Condition 2. When the UE is indicated by the base station that the base station satisfies the condition in step 1075

The UE AS may indicate to the base station that the above condition is satisfied by including a parameter regarding the availability indicator or configuring the same to true, and may indicate to the base station that the above condition is not satisfied by not including a parameter regarding the availability indicator or configuring the same to false.

As an embodiment of the disclosure, the availability indicator transmitted by the UE APP to the UE AS layer and the availability indicator transmitted by the UE AS to the base station may be indicated by RRC ID of the QoE configuration. For example, for a QoE configuration with RRC ID 1, since there is a stored measurement result, the availability indicator corresponding to RRC ID 1 may be included or configured to true. On the other hand, for a QoE configuration with RRC ID 2, since there is no stored measurement result, the availability indicator corresponding to RRC ID 2 may be omitted or configured to false. As an embodiment of the disclosure, the UE may define/use the availability indicator parameter to include only the RRC ID(s) of the QoE configuration for which the measurement result is stored (in the above example, the UE may transmit RRC ID=1 to the base station as the availability indicator).

The above embodiment of indicating the availability indicator by RRC ID of QoE configuration may be used in Option A. This is because, in Option A, the new base station with which the UE establishes RRC connection may recover QoE configuration (2) (including RRC ID configured by previous base station) that the UE had from AMF. Therefore, the new base station may understand the availability indicator by RRC ID of the UE.

In step 1090, the base station may transmit a retrieval request for the stored QoE measurement results to the UE AS. The base station may transmit the retrieval request to the UE AS via a UEInformationRequest or RRCReconfiguration message. A parameter indicating the retrieval request in the UEInformationRequest or RRCReconfiguration message may be defined. If the corresponding parameter is included in the message or configured to true, it may mean a retrieval request, and the UE AS may transmit the retrieval request to the UE APP (e.g., by defining the retrieval request indicator as AT command and including the same or configuring the same to true). Conversely, if the parameter is omitted or configured to false, it may mean that a retrieval request is not performed, and the UE AS may transmit the retrieval request to the UE APP (e.g., by omitting the retrieval request indicator as AT command or configuring the same to false).

As an embodiment of the disclosure, after the UE transmits to the base station the fact that the UE is storing QoE measurement results via the availability indicator, the base station may transmit the retrieval request to the UE AS in response thereto. That is, the base station may recognize the fact that the UE is storing QoE measurement results and then request a retrieval of the measurement results or reports. In an embodiment, if the availability indicator is indicated by RRC ID, the retrieval request (retrieval request transmitted from the base station to the UE AS and retrieval request transmitted from the UE AS to the UE APP) may also be indicated by RRC ID to indicate whether to request retrieval of QoE measurement results by RRC ID (whether to request or not to request). In the case of an embodiment that defines the retrieval request in the RRCReconfiguration message, when the UE AS receives the RRCReconfiguration message that includes an SRB configuration (e.g., configuration of SRB4) for QoE measurement report, the UE AS may understand that the base station has transmitted the retrieval request and may transmit the stored QoE measurement report to the UE APP. Conversely, when the UE receives the RRCReconfiguration message that does not include an SRB configuration (e.g., configuration of SRB4) for QoE measurement report, the UE may understand that the base station has not transmitted the retrieval request and may not transmit this to the UE APP or may transmit that there is no retrieval request to the UE APP.

In step 1095, the UE may transmit the stored QoE measurement report to the base station. As an embodiment of the disclosure, the UE may perform the above operation after receiving the retrieval request from the base station. As an embodiment of the disclosure, when the base station transmits the retrieval request to the UE AS via the UEInformationRequest message, the retrieval request may be transmitted to the UE APP, and the UE APP may transmit the stored QoE measurement report to the UE AS. The UE AS receiving this may transmit the QoE measurement report to the base station via the UEInformationResponse message. As an embodiment of the disclosure, when the base station transmits the retrieval request to the UE AS via the RRCReconfiguration message, the UE AS may transmit the stored QoE measurement report to the UE AS. The UE AS receiving this may perform the QoE measurement report via the MeasurementReportAppLayer message. As an embodiment of the disclosure, when Option A is used, the UE may perform the QoE measurement report by RRC ID. For example, each QoE measurement report may include a corresponding RRC ID. As an embodiment of the disclosure, when Option B is used, the UE may perform the QoE measurement report by CN ID. For example, each QoE measurement report may include a corresponding CN ID.

In step 10100, as an embodiment of the disclosure, the UE APP may continue to perform QoE measurement for QoE configuration (2) and generate a measurement report to be transmitted to the UE AS (step 1080) after transitioning to the connected mode. The UE AS receiving the measurement report is in the connected mode, so the UE AS may immediately report the same to the base station (without going via the steps 1065 to 1090). In this case, the UE AS may perform a QoE measurement report to the base station by using the MeasurementReportAppLayer message.

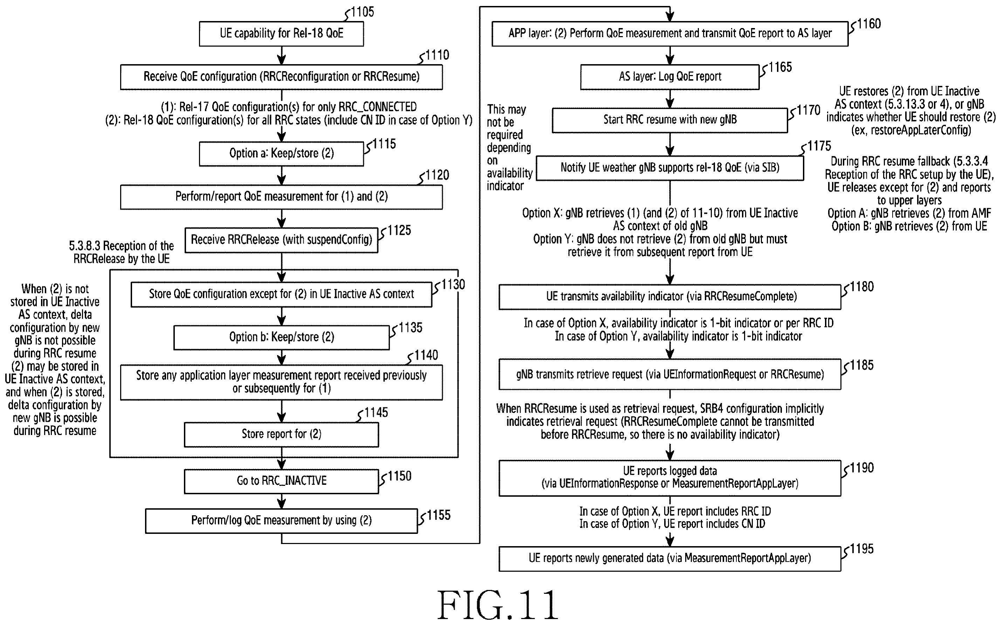

FIG. 11 is a diagram illustrating a procedure for an inactive mode UE to store QoE measurement results in an AS layer, as an embodiment of the disclosure.

In step 1105, the operation and related description of the UE and base station may be applied with the same or similar intent as described in 905.

In step 1110, the operation and related description of the UE and base station may be applied with the same or similar intent as described in 910.

In step 1115, the operation and related description of the UE and base station may be applied with the same or similar intent as described in 915.

In step 1120, the operation and related description of the UE and base station may be applied with the same or similar intent as described in 920.

In step 1125, the UE may transition to the inactive mode after receiving an RRCRelease message. To this end, the RRCRelease may include suspendConfig.

As an embodiment of the disclosure, the UE may perform steps 1130, 1135, 1140, and 1145 in the process of transitioning the UE to the inactive mode, which may be described in section 5.3.8.3 (Reception of the *RRCRelease* by the UE) in 3GPP standard document TS 38.331.

In step 1130, when the UE receives RRCRelease including suspendConfig, the QoE configuration (1) may be stored as UE Inactive AS Context. The information stored as the UE Inactive AS Context may be information for restoring and using this information when the UE transitions to the inactive mode and later returns to the connected mode. However, since the QoE configuration (2) is information that should be used for measurement and storage in the inactive mode, it may not be stored as the UE Inactive AS Context. Therefore, the UE may store only the QoE configuration information (1) excluding the QoE configuration (2) as the UE Inactive AS Context. If the QoE configuration (2) is not stored as the UE Inactive AS Context, the base station with which the UE resume a new RRC connection (1170) later may restore the UE Inactive AS Context of the corresponding UE, but since the QoE configuration (2) is not included in it, the delta configuration is not possible and the full configuration method may be used to change the QoE configuration (2) of the UE.

As an embodiment of the disclosure, the UE may store not only the QoE configuration (1) but also the QoE configuration (2) as the UE Inactive AS Context. Since the UE receives the two QoE configuration information and transmits the information to the UE APP, the UE APP may store the same and measure the QoE (step 1120). Therefore, even if the UE AS does not use the QoE configuration (2) in the inactive mode by storing the QoE configuration (2) as the UE Inactive AS Context, the UE APP may generate QoE measurement and report for the QoE configuration (2). When the UE stores the QoE configuration (2) as the UE Inactive AS Context, the base station with which the UE resume the new RRC connection (1170) later may restore the UE Inactive AS Context including the QoE configuration (2) of the UE and use the same for the delta configuration.

In step 1135, if the UE does not store the QoE configuration (2) in the UE Inactive AS Context in step 1130, the UE may store the QoE configuration (2) separately (Option b). This may be to perform QoE measurement without discarding or releasing the QoE configuration 2 after the UE receives RRCRelease or after transitioning to inactive/idle mode. As an embodiment of the disclosure, instead of the operation of Option b, the UE may perform the operation of Option a in 1115.

In step 1140, when the UE has not yet transmitted the QoE measurement report on the QoE configuration (1) to a lower layer, the UE may separately store the QoE measurement report. This may be for transmission when transitioning to the connected mode later.

In step 1145, when the UE has not yet transmitted the QoE measurement report on the QoE configuration (2) to a lower layer, the UE may separately store the QoE measurement report. This may be for transmission when transitioning to the connected mode later. As an embodiment of the disclosure, the UE may transmit the stored measurement report to the base station together with the stored QoE measurement report in the inactive/idle mode.

In step 1150, the UE may transition to the inactive mode.

In step 1155, the UE may perform QoE measurement in the inactive mode according to the stored QoE configuration (2) and store the measurement result.

In step 1160, the APP layer of the UE may perform QoE measurement in the inactive mode according to the QoE configuration (2) and transmit the measurement result report to the AS layer (RRC layer) of the UE. Step 1160 may be a step included in step 1155.

In step 1165, the UE AS layer may store the QoE measurement result report received from the APP layer. Step 1165 may be a step included in step 1155.

In step 1170, the UE may start RRC connection resumption (RRC resume) to the (new) base station. In the case of an embodiment of the disclosure described in step 1130 (the UE may store not only QoE configuration (1) but also QoE configuration (2) together with the UE Inactive AS Context), the UE may restore QoE configuration (2) from the UE Inactive AS Context during the RRC resume process. As an embodiment of the disclosure, the base station may indicate the UE to restore QoE configuration (2) from the UE Inactive AS Context. For example, when an indicator (e.g., restoreAppLayerConfig) is defined in RRCResume and the UE receives RRCResume including restoreAppLayerConfig, the QoE configuration (2) may be restored, and when the UE receives RRCResume omitting restoreAppLayerConfig, the QoE configuration (2) may not be restored.

The UE may perform the above operation during the RRC connection resume process (e.g., the RRCResumeRequest transmission process and the RRCResume reception process), and the above operation may be defined in TS 38.331 section 5.3.13.3 (Actions related to transmission of RRCResumeRequest or RRCResumeRequest1 message) or 5.3.13.4 (Reception of the RRCResume by the UE).

In step 1175, if some or all of the following conditions are satisfied, the base station may indicate this to the UE (e.g., via an SIB) (e.g., by including a related parameter or configuring the value to true). Conversely, if some or all of the following conditions are not satisfied, the base station may indicate this to the UE by not including the related parameter or configuring the value to false.
- Condition 1. When the base station supports or allows Release 18 QoE feature
- Condition 2. When the base station supports or allows QoE measurement in idle/inactive modes
- Condition 3. When the base station supports or allows retrieval of QoE measurement results in idle/inactive modes

As an embodiment of the disclosure, step 1175 may be omitted. For example, this is because the base station may indicate to the UE whether to allow or not to allow QoE measurement report of each UE by including or not including a retrieval request in step 1185.

Regarding the QoE configuration (2) of the inactive UE, the new base station may have two operation options.
- As Option X, the base station may restore the QoE configuration (2) of the inactive UE to the previous base station (the base station that transmitted the QoE configuration to the inactive UE in step 1110) or AMF. As an embodiment of the disclosure, the QoE configuration (2) may be stored as the UE Inactive AS Context and then restored.
- As Option Y, the base station may obtain information (e.g., CN ID) on the QoE configuration (2) via the UE's QoE measurement report without recovering the QoE configuration (2) from the AMF or previous base station. Option Y may be the same as Option B.

As an embodiment of the disclosure, after the UE transmits an RRC resume request message to the base station, if the base station transmits an RRC Setup message to the UE, the UE may delete the QoE configuration (1) (because the base station cannot restore the same). However, the UE may not delete the QoE configuration (2). This is because that the base station may restore the QoE configuration (2) from the AMF (refer to Option A or Option X) or obtain information (e.g., CN ID) on the QoE configuration (2) via the UE's measurement report (refer to Option B or Option Y).

In step 1180, the UE may transmit an availability indicator (QoE measurement report storage indicator) (e.g., included in an RRCSetupComplete message) during the RRC connection establishment process with the (new) base station when specific conditions (some or all of the conditions below) are satisfied.
- Condition 1. When the UE is storing QoE data or reports measured in inactive/idle mode
- Condition 2. When the UE is indicated by the base station that the base station satisfies the condition in step 1175

The UE may indicate to the base station that the condition is satisfied by including a parameter regarding the availability indicator or configuring the same to true, and may indicate to the base station that the condition is not satisfied by not including the parameter regarding the availability indicator or configuring the same to false.

As an embodiment of the disclosure, the availability indicator may be indicated by RRC ID of QoE configuration. For example, in step 1110, the UE may receive two QoE configurations (QoE configuration A and QoE configuration B) belonging to QoE configuration (2). QoE configuration A may have RRC ID 1. QoE configuration B may have RRC ID 2. Thereafter, in steps 1160 and 1165, the UE may perform QoE measurement for QoE configuration A and QoE configuration B, respectively, and store each measurement result separately (measurement result for QoE configuration A and measurement result for QoE configuration B).

In step 1180, if the UE does not have a measurement result for QoE configuration A stored (e.g., if an MBS broadcast session for QoE configuration A is not serviced in the APP layer), but only stores a measurement result for QoE configuration B, the UE may not include the parameter regarding the availability indicator corresponding to RRC ID 1 or configure the same to false to indicate that there is no measurement result for QoE configuration A, and at the same time, the UE may include the parameter regarding the availability indicator corresponding to RRC ID 2 or may configure the same to true to indicate that a measurement result for QoE configuration B exists. As an embodiment of the disclosure, the UE may define/use the availability indicator parameter to include only the RRC ID(s) of the QoE configuration for which the measurement result is stored (in the above example, the UE may transmit RRC ID=2 as an availability indicator to the base station).

The above embodiment of indicating availability indicator by RRC ID of QoE configuration may be used in Option X. This is because, in Option X, the new base station with which the UE establishes an RRC connection may recover QoE configuration (2) (including the RRC ID configured by previous base station) that the UE had from AMF or the previous base station. Therefore, the new base station may understand the availability indicator by RRC ID of the UE.

In step 1185, the base station may transmit a retrieval request for the stored QoE measurement results to the UE. The base station may transmit the retrieval request to the UE via a UEInformationRequest or RRCResume message. A parameter indicating the retrieval request in the UEInformationRequest or RRCResume message may be defined. If the corresponding parameter is included in the message or configured to true, it may indicate that a retrieval request is made, and if the corresponding parameter is omitted or configured to false, it may indicate that a retrieval request is not made. As an embodiment of the disclosure, after the UE transmits to the base station the fact that the UE is storing QoE measurement results via the availability indicator, the base station may transmit the retrieval request to the UE in response thereto. That is, the base station may recognize the fact that the UE is storing QoE measurement results and then request a retrieval of the measurement results or reports. In an embodiment, if the availability indicator is indicated by RRC ID, the retrieval request may also be indicated by RRC ID to indicate whether to request retrieval of QoE measurement results by RRC ID (whether to request or not to request).

In the case of an embodiment that defines the retrieval request in the RRCResume message, when the UE receives the RRCResume message that includes an SRB configuration (e.g., configuration of SRB4) for QoE measurement report, the UE may understand that the base station has transmitted the retrieval request and may transmit the stored QoE measurement report to the base station. Conversely, when the UE receives the RRCResume message that does not include an SRB configuration (e.g., configuration of SRB4) for QoE measurement report, the UE may understand that the base station has not transmitted the retrieval request and may not transmit the stored QoE measurement report to the base station.

In step 1190, the UE may transmit the stored QoE measurement report to the base station. As an embodiment of the disclosure, the UE may perform the above operation after receiving the retrieval request from the base station. As an embodiment of the disclosure, when the base station transmits the retrieval request to the UE via the UEInformationRequest message, the UE may perform the stored QoE measurement report via the UEInformationResponse message. As an embodiment of the disclosure, when the base station transmits the retrieval request to the UE via the RRCResume message, the UE may transmit the stored QoE measurement report to the base station via the MeasurementReportAppLayer message. As an embodiment of the disclosure, when Option X is used, the UE may perform the QoE measurement report by RRC ID. For example, each QoE measurement report may include a corresponding RRC ID. As an embodiment of the disclosure, when Option Y is used, the UE may perform the QoE measurement report by CN ID. For example, each QoE measurement report may include a corresponding CN ID.

In step 1195, as an embodiment of the disclosure, the UE may continue to perform QoE measurement for QoE configuration (2) and generate a measurement report after transitioning to the connected mode. Since the UE is in the connected mode, the UE may immediately report this to the base station (without going via the steps 1165 to 1185). In this case, the UE may perform a QoE measurement report by using the MeasurementReportAppLayer message.

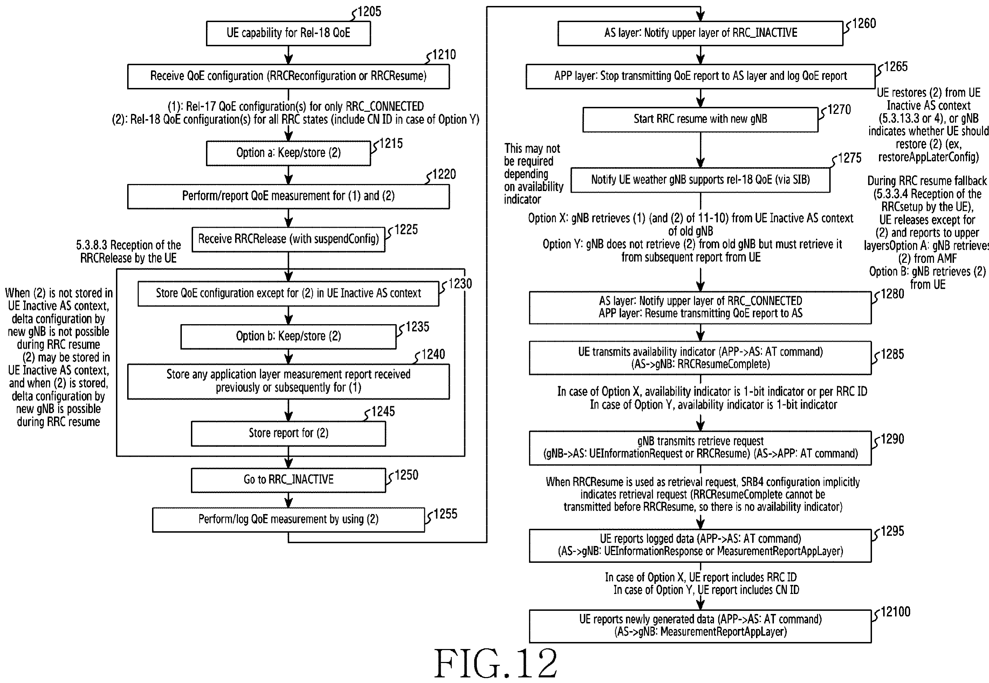

FIG. 12 is a diagram illustrating a procedure for an inactive mode UE to store QoE measurement results in an AS layer, as an embodiment of the disclosure.

From Steps 1205 to 1255, the operation and the related descriptions of the UE and the base station may be applied to the same or similar intent as described in steps 1105 to 1155.

In step 1260, the UE AS layer (RRC layer) may transition to the inactive mode and then notify some or all of the following information to the upper layer or the APP layer.
- Information 1. Indicator informing UE AS layer of RRC state transition to inactive mode
- Information 2. Indicator informing UE AS layer of RRC state transition to inactive mode or idle mode
- Information 3. Indicator to stop transmitting QoE measurement report measured by UE APP layer to AS layer

The above information or indicator may be defined as AT command.

In step 1265, the UE APP layer may stop transmitting the measurement report generated according to QoE configuration (2) to the AS layer after receiving the above information, and may store the measurement report.

In step 1270, the UE may start RRC connection resumption (RRC resume) to the (new) base station. In the case of an embodiment of the disclosure described in step 1230 (the UE may store not only QoE configuration (1) but also QoE configuration (2) together with the UE Inactive AS Context), the UE may restore QoE configuration (2) from the UE Inactive AS Context during the RRC resume process. As an embodiment of the disclosure, the base station may indicate the UE to restore QoE configuration (2) from the UE Inactive AS Context. For example, when an indicator (e.g., restoreAppLayerConfig) is defined in RRCResume and the UE receives RRCResume including restoreAppLayerConfig, the QoE configuration (2) may be restored, and when the UE receives RRCResume omitting restoreAppLayerConfig, the QoE configuration (2) may not be restored.

The UE may perform the above operation during the RRC connection resume process (e.g., the RRCResumeRequest transmission process and the RRCResume reception process), and the above operation may be defined in TS 38.331 section 5.3.13.3 (Actions related to transmission of RRCResumeRequest or RRCResumeRequest1 message) or 5.3.13.4 (Reception of the RRCResume by the UE).

In step 1275, if some or all of the following conditions are satisfied, the base station may indicate this to the UE (e.g., via an SIB) (e.g., by including a related parameter or configuring the value to true). Conversely, if some or all of the following conditions are not satisfied, the base station may indicate this to the UE by not including the related parameter or configuring the value to false.
- Condition 1. When the base station supports or allows Release 18 QoE feature
- Condition 2. When the base station supports or allows QoE measurement in idle/inactive modes
- Condition 3. When the base station supports or allows retrieval of QoE measurement results in idle/inactive modes

As an embodiment of the disclosure, step 1275 may be omitted. For example, this is because the base station may indicate to the UE whether to allow or not to allow QoE measurement report of each UE by including or not including a retrieval request in step 1290.

Regarding the QoE configuration (2) of the inactive UE, the new base station may have two operation options.
- As Option X, the base station may restore the QoE configuration (2) of the inactive UE to the previous base station (the base station that transmitted the QoE configuration to the inactive UE in step 1210) or AMF. As an embodiment of the disclosure, the QoE configuration (2) may be stored as the UE Inactive AS Context and then restored.
- As Option Y, the base station may obtain information (e.g., CN ID) on the QoE configuration (2) via the UE's QoE measurement report without recovering the QoE configuration (2) from the AMF or previous base station. Option Y may be the same as Option B.

As an embodiment of the disclosure, after the UE transmits an RRC resume request message to the base station, if the base station transmits an RRC Setup message to the UE, the UE may delete the QoE configuration (1) (because the base station cannot restore the same). However, the UE may not delete the QoE configuration (2). This is because the base station may restore the QoE configuration (2) from the AMF (refer to Option A or Option X) or obtain information (e.g., CN ID) on the QoE configuration (2) via the UE's measurement report (refer to Option B or Option Y).

In step 1280, the UE AS layer (RRC layer) may transition to the connected mode and then notify the upper layer or the APP layer of some or all of the following information.
- Information 1. Indicator informing UE AS layer of RRC state transition to connected mode
- Information 2. Indicator to resume transmitting QoE measurement report measured by UE APP layer to AS layer

After receiving the above information, the UE APP layer may resume the operation of transmitting the newly generated measurement report to the AS layer according to the QoE configuration (2).

In step 1285, if there is the QoE measurement report (not transmitted to the AS layer) measured and stored during the inactive/idle mode, the UE APP may transmit an availability indicator (QoE measurement report storage indicator) to the AS layer. The APP layer may indicate to the AS layer that there is a stored QoE measurement report by including a parameter related to the availability indicator or configuring the same to true, and may indicate to the AS layer that there is no stored QoE measurement report by not including a parameter related to the availability indicator or configuring the same to false. The availability indicator transmitted from the APP layer to the AS layer may be defined as an AT command.

The UE AS layer may transmit the availability indicator (QoE measurement report storage indicator) (e.g., by including the availability indicator in the RRCResumeComplete message) during the RRC connection establishment process with the (new) base station when specific conditions (some or all of the conditions below) are satisfied.
- Condition 1. When indicated by the UE APP layer that there is a stored QoE measurement report (e.g., via the availability indicator from the APP layer to the AS layer)
- Condition 2. When the UE is indicated by the base station that the base station satisfies the condition in step 1275

The UE AS may indicate to the base station that the above condition is satisfied by including a parameter regarding the availability indicator or configuring the same to true, and may indicate to the base station that the above condition is not satisfied by not including a parameter regarding the availability indicator or configuring the same to false.

As an embodiment of the disclosure, the availability indicator transmitted by the UE APP to the UE AS layer and the availability indicator transmitted by the UE AS to the base station may be indicated by RRC ID of the QoE configuration. For example, for a QoE configuration with RRC ID 1, since there is a stored measurement result, the availability indicator corresponding to RRC ID 1 may be included or configured to true. On the other hand, for a QoE configuration with RRC ID 2, since there is no stored measurement result, the availability indicator corresponding to RRC ID 2 may be omitted or configured to false. As an embodiment of the disclosure, the UE may define/use the availability indicator parameter to include only the RRC ID(s) of the QoE configuration for which the measurement result is stored (in the above example, the UE may transmit RRC ID=1 to the base station as the availability indicator).

The above embodiment of indicating the availability indicator by RRC ID of QoE configuration may be used in Option X. This is because, in Option X, the new base station with which the UE establishes RRC connection may recover QoE configuration (2) that the UE has received from the previous base station (including RRC ID configured by previous base station) that the UE had from AMF. Therefore, the new base station may understand the availability indicator by RRC ID of the UE.

In step 1290, the base station may transmit a retrieval request for the stored QoE measurement results to the UE AS. The base station may transmit the retrieval request to the UE AS via a UEInformationRequest or RRCResume message. A parameter indicating the retrieval request in the UEInformationRequest or RRCResume message may be defined. If the corresponding parameter is included in the message or configured to true, it may mean a retrieval request, and the UE AS may transmit the retrieval request to the UE APP (e.g., by defining the retrieval request indicator as AT command and including the same or configuring the same to true). Conversely, if the parameter is omitted or configured to false, it may mean that a retrieval request is not performed, and the UE AS may transmit the retrieval request to the UE APP (e.g., by defining the retrieval request indicator as AT command and omitting or configuring the same to false). As an embodiment of the disclosure, after the UE transmits to the base station the fact that the UE is storing QoE measurement results via the availability indicator, the base station may transmit the retrieval request to the UE AS in response thereto. That is, the base station may recognize the fact that the UE is storing QoE measurement results and then request a retrieval of the measurement results or reports. In an embodiment, if the availability indicator is indicated by RRC ID, the retrieval request (retrieval request transmitted from the base station to the UE AS and retrieval request transmitted from the UE AS to the UE APP) may also be indicated by RRC ID to indicate whether to request retrieval of QoE measurement results by RRC ID (whether to request or not to request).

In the case of an embodiment that defines the retrieval request in the RRCResume message, when the UE AS receives the RRCResume message that includes an SRB configuration (e.g., configuration of SRB4) for QoE measurement report, the UE AS may understand that the base station has transmitted the retrieval request and may transmit the stored QoE measurement report to the UE APP. Conversely, when the UE receives the RRCResume message that does not include an SRB configuration (e.g., configuration of SRB4) for QoE measurement report, the UE may understand that the base station has not transmitted the retrieval request and may not transmit this to the UE APP or may transmit that there is no retrieval request to the UE APP.

In step 1295, the UE may transmit the stored QoE measurement report to the base station. As an embodiment of the disclosure, the UE may perform the above operation after receiving the retrieval request from the base station. As an embodiment of the disclosure, when the base station transmits the retrieval request to the UE AS via the UEInformationRequest message, the retrieval request may be transmitted to the UE APP, and the UE APP may transmit the stored QoE measurement report to the UE AS. The UE AS receiving this may transmit the QoE measurement report to the base station via the UEInformationResponse message.

As an embodiment of the disclosure, when the base station transmits the retrieval request to the UE AS via the RRCResume message, the UE AS may transmit the retrieval request to the UE APP and the UE APP may transmit the stored QoE measurement report to the UE AS. The UE AS receiving this may perform the QoE measurement report via the MeasurementReportApplayer message. As an embodiment of the disclosure, when Option X is used, the UE may perform the QoE measurement report by RRC ID. For example, each QoE measurement report may include a corresponding RRC ID. As an embodiment of the disclosure, when Option Y is used, the UE may perform the QoE measurement report by CN ID. For example, each QoE measurement report may include a corresponding CN ID.

In step 12100, as an embodiment of the disclosure, the UE APP may continue to perform QoE measurement for QoE configuration (2) and generate a measurement report to be transmitted to the UE AS (step 1280) after transitioning to the connected mode. The UE AS receiving the measurement report is in the connected mode, so the UE AS may immediately report the same to the base station (without going via the steps 1265 to 1290). In this case, the UE AS may perform a QoE measurement report to the base station by using the MeasurementReportAppLayer message.

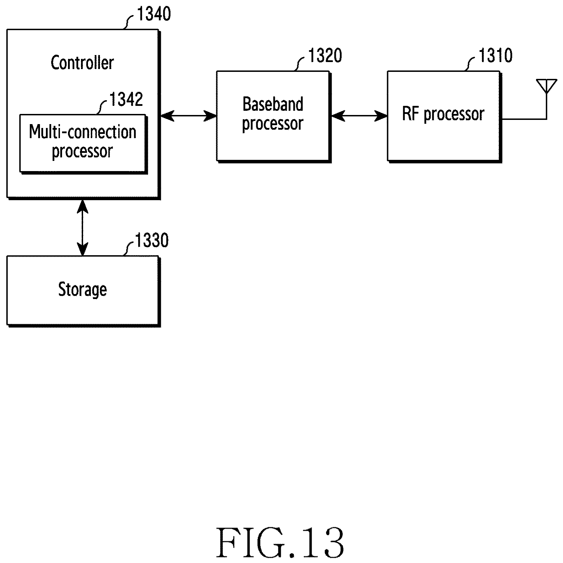

FIG. 13 illustrates an internal structure of a UE according to embodiments of the disclosure.

Referring to FIG. 13, the UE may include a radio frequency (RF) processor 1310, a baseband processor 1320, a storage 1330, and a controller 1340.

The RF processor 1310 may perform a function for transmitting and receiving a signal via a wireless channel, such as band conversion and amplification of the signal. That is, the RF processor 1310 may up-convert a baseband signal provided from the baseband processor 1320 to an RF band signal, may transmit the same through an antenna, and may down-convert an RF band signal received through the antenna to a baseband signal. For example, the RF processor 1310 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1310 may include multiple RF chains. Furthermore, the RF processor 1310 may perform beamforming. For the beamforming, the RF processor 1310 may adjust the phase and magnitude of signals transmitted/received through multiple antennas or antenna elements, respectively. In addition, the RF processor 1310 may perform multiple input multiple output (MIMO), and may receive multiple layers when performing MIMO operations.

The baseband processor 1320 may perform functions of conversion between baseband signals and bitstrings according to the system's physical layer specifications. For example, during data transmission, the baseband processor 1320 may encode and modulate a transmitted bitstring to generate complex symbols. In addition, during data reception, the baseband processor 1320 may demodulate and decode a baseband signal provided from the RF processor 1310 to restore a received bitstring. For example, when following the orthogonal frequency division multiplexing (OFDM) scheme, during data transmission, the baseband processor 1320 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 1320 may split a baseband signal provided from the RF processor 1310 at the OFDM symbol level, may restore signals mapped to subcarriers through a fast Fourier transform (FFT) operation, and may restore a received bitstring through demodulation and decoding.

The baseband processor 1320 and the RF processor 1310 may transmit and receive signals as described above. Therefore, the baseband processor 1320 and the RF processor 1310 may be referred to as a transmitter, a receiver, a transceiver, or a communication unit. Furthermore, at least one of the baseband processor 1320 and the RF processor 1310 may include multiple communication modules to support multiple different radio access technologies. In addition, at least one of the baseband processor 1320 and the RF processor 1310 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1330 may store basic programs, application programs, and data, such as configuration information, for operation of the main base station. In addition, the storage 1330 may provide the stored data at the request of the controller 1340.

The controller 1340 may control the overall operation of the UE. For example, the controller 1340 may transmit and receive signals through the baseband processor 1320 and the RF processor 1310. In addition, the controller1340 records data in the storage 1330 and reads the data from the storage 1330. To this end, the controller 1340 may include at least one processor. For example, the controller 1340 may include a communication processor (CP) configured to perform control for communication, and an application processor (AP) configured to control upper layers such as application programs. The controller 1340 described above may further include a multi-connection processor 1342 to support multiple connections.

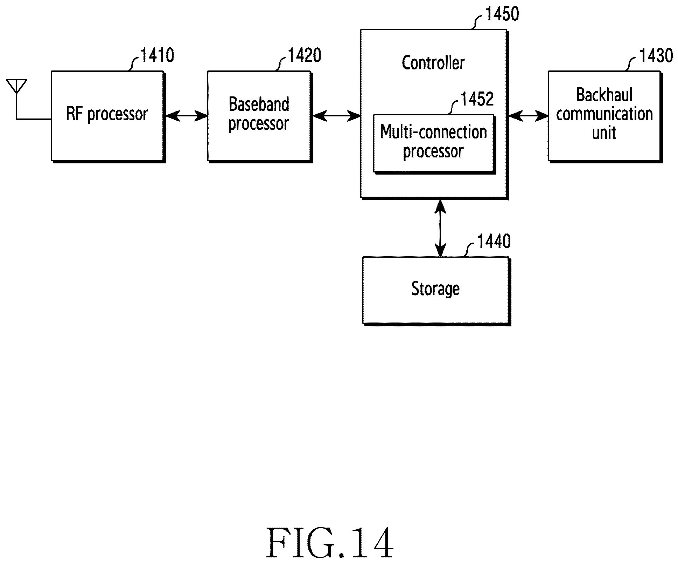

FIG. 14 illustrates a structure of a base station according to embodiments of the disclosure.

Referring to FIG. 14, the base station may include an RF processor 1410, a baseband processor 1420, a backhaul communication unit 1430, a storage 1440, and a controller 1450.

The RF processor 1410 may perform a function for transmitting and receiving a signal via a wireless channel, such as band conversion and amplification of the signal. That is, the RF processor 1410 may up-convert a baseband signal provided from the baseband processor 1420 to an RF band signal, may transmit the same through an antenna, and may down-convert an RF band signal received through the antenna to a baseband signal. For example, the RF processor 1410 may include a transmission filter, a reception filter, an amplifier, a mixer, an oscillator, a DAC, and an ADC. Although only one antenna is illustrated in the drawing, the first access node may include multiple antennas. In addition, the RF processor 1410 may include multiple RF chains. Furthermore, the RF processor 1410 may perform beamforming. For the beamforming, the RF processor 1410 may adjust the phase and magnitude of signals transmitted/received through multiple antennas or antenna elements, respectively. The RF processor may transmit one or more layers to perform a downward MIMO operation.

The baseband processor 1420 may perform functions of conversion between baseband signals and bitstrings according to the physical layer specifications of first radio access technology. For example, during data transmission, the baseband processor 1420 may encode and modulate a transmitted bitstring to generate complex symbols. In addition, in case of data reception, the baseband processor 1420 may demodulate and decode a baseband signal provided from the RF processor 1410 to restore a received bitstring. For example, when following the OFDM scheme, during data transmission, the baseband processor 1420 may encode and modulate a transmitted bitstring to generate complex symbols, may map the complex symbols to subcarriers, and may configure OFDM symbols through an IFFT operation and CP insertion. In addition, during data reception, the baseband processor 1420 may split a baseband signal provided from the RF processor 1410 at the OFDM symbol level, may restore signals mapped to subcarriers through FFT operation, and may restore a received bitstring through demodulation and decoding. The baseband processor 1420 and the RF processor 1410 may transmit and receive signals as described above. Therefore, the baseband processor 1420 and the RF processor 1410 may be referred to as a transmitter, a receiver, a transceiver, a communication unit, or a wireless communication unit.

The backhaul communicator 1430 may provide an interface for performing communication with other nodes in a network. That is, the backhaul communication unit 1430 may convert bitstrings transmitted from the main base station to other nodes (for example, auxiliary base station, core network) to physical signals, and may convert physical signals received from other nodes to bitstrings.

The storage 1440 may store basic programs, application programs, and data, such as configuration information, for operation of the main base station. In addition, the storage 1440 may provide the stored data at the request of the controller 1450.

The controller 1450 may control the overall operation of the main base station. For example, the controller 1450 may transmit/receive signals through the baseband processor 1420 and the RF processor 1410 or through the backhaul communication unit 1430. In addition, the controller1450 records data in the storage 1440 and reads the data from the storage 1440. To this end, the controller 1450 may include at least one processor. In addition, the controller 1450 may further include a multi-connection processor 1452 to support multiple connections.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving configuration information related to a quality of experience (QoE) measurement in a radio resource control (RRC) idle state and an RRC inactive state;
generating and storing a QoE measurement report in the RRC idle state;
receiving, from a base station, a first message including information indicating that reporting of a QoE measurement generated in the RRC idle state or the RRC inactive state is permitted; and
based on the information, transmitting, to the base station, a second message including the QoE measurement report and the configuration information in an RRC connected state.

2. The method of claim 1, wherein the configuration information comprises first information for QoE reference and second information for measurement collection entity (MCE) identification.

3. The method of claim 1, wherein the first message comprises an RRC reconfiguration message, and the second message comprises an application layer measurement report message.

4. The method of claim 1, wherein the configuration information is received in case that the terminal supports capability for the QoE measurement in the RRC idle state and the RRC inactive state.

5. A terminal in a wireless communication system, the terminal comprising:
a transceiver; and
a controller connected to the transceiver,
wherein the controller is configured to:
receive configuration information related to a quality of experience (QoE) measurement in a radio resource control (RRC) idle state and an RRC inactive state;
generate and store a QoE measurement report in the RRC idle state;
receive, from a base station, a first message including information indicating that reporting of a QoE measurement generated in the RRC idle state or the RRC inactive state is permitted; and
based on the information, transmit, to the base station, a second message including the QoE measurement report and the configuration information in an RRC connected state.

6. The terminal of claim 5, wherein the configuration information comprises first information for QoE reference and second information for measurement collection entity (MCE) identification.

7. The terminal of claim 5, wherein the first message comprises an RRC reconfiguration message, and the second message comprises an application layer measurement report message.

8. The terminal of claim 5, wherein the configuration information is received in case that the terminal supports capability for the QoE measurement in the RRC idle state and the RRC inactive state.

9. A method performed by a terminal in a wireless communication system, the method comprising:
receiving configuration information related to a quality of experience (QoE) measurement in a radio resource control (RRC) idle state and an RRC inactive state;
generating and storing a QoE measurement report in the RRC inactive state;
receiving, from a base station, a first message including information indicating that reporting of a QoE measurement generated in the RRC idle state or the RRC inactive state is permitted; and
based on the information, transmitting, to the base station, a second message including the QoE measurement report and the configuration information in an RRC connected state.

10. The method of claim 9, wherein the configuration information comprises first information for QoE reference and second information for measurement collection entity (MCE) identification, and
wherein the first message comprises an RRC resume message, and the second message comprises an application layer measurement report message.

11. The method of claim 9, wherein the configuration information is received in case that the terminal supports capability for the QoE measurement in the RRC idle state and the RRC inactive state.

12. A terminal in a wireless communication system, the terminal comprising:
a transceiver; and
a controller connected to the transceiver,
wherein the controller is configured to:
receive configuration information related to a quality of experience (QoE) measurement in a radio resource control (RRC) idle state and an RRC inactive state;
generate and store a QoE measurement report in the RRC inactive state;
receive, from a base station, a first message including information indicating that reporting of a QoE measurement generated in the RRC idle state or the RRC inactive state is permitted; and
based on the information, transmit, to the base station, a second message including the QoE measurement report and the configuration information in an RRC connected state.

13. The terminal of claim 12, wherein the configuration information comprises first information for QoE reference and second information for measurement collection entity (MCE) identification.

14. The terminal of claim 12, wherein the first message comprises an RRC resume message, and the second message comprises an application layer measurement report message.

15. The terminal of claim 12, wherein the configuration information is received in case that the terminal supports capability for the QoE measurement in the RRC idle state and the RRC inactive state.
